# FASCICULE DE BREVET EUROPEEN

(11) **EP 4 330 202 B1**
(45) Date de publication et mention de la délivrance du brevet: **23.04.2025**
(21) Numéro de dépôt: 22726490.0
(22) Date de dépôt: 28.04.2022
(51) Int. Cl.: C03C 1/00, C03C 3/062, C03C 3/087, C03C 13/06, C03B 37/00, C03C 13/04

(54) **PROCEDE DE FABRICATION DE LAINE MINERALE A PARTIR DE MATIERES MINERALES NON TRANSFORMEES**
VERFAHREN ZUR HERSTELLUNG VON MINERALWOLLE AUS UNBEHANDELTEN MINERALMATERIALIEN
METHOD FOR PRODUCING MINERAL WOOL FROM UNPROCESSED MINERAL MATERIALS

(30) Priorité: 28.04.2021 FR 2104439
(43) Date de publication de la demande: 06.03.2024
(73) Titulaire: SAINT-GOBAIN ISOVER, 92400 Courbevoie (FR)
(72) Inventeur: DI PIERRO, Simonpietro, 60800 ORMOY-VILLERS (FR); ORTIZ, Aurélie, 78000 VERSAILLES (FR)
(74) Mandataire: Saint-Gobain Recherche
(86) Numéro de dépôt international: PCT/FR2022/050820
(87) Numéro de publication internationale: WO 2022/229570

(56) Documents cités:
- EP-A1- 0 525 816
- WO-A1-02/051766
- CN-A- 112 299 701
- US-B1- 6 346 494
- ZAGAR L ET AL: "UNTERSUCHUNG VON MAGMATISCHEN GESTEINEN IM HINBLICK AUF IHRE VERWENDBARKEIT FUER DIE HERSTELLUNG VON GESTEINSFASERN", SPRECHSAAL, VERLAG DES SPRECHSAAL MULLER UND SCHMIDT. COBURG, DE, vol. 114, no. 7, 1 July 1981 (1981-07-01), pages 498 - 506, 508, XP001231744, ISSN: 0341-0676

## Description

L'invention concerne le domaine de la fusion d'un mélange de matières premières, en particulier pour la fabrication d'une laine minérale tel qu'utilisée notamment dans le domaine de l'isolation thermique et/ou acoustique des bâtiments ou autres. Elle s'intéresse plus particulièrement aux laines minérales du type laine de roche, c'est-à-dire dont les compositions chimiques entraînent une température de liquidus élevées et une grande fluidité à leur température de fibrage, associées à une température de transition vitreuse élevée.

Conventionnellement, ce type de laine minérale est fibré par des procédés de centrifugation dits « externes », par exemple du type de ceux utilisant une cascade de roues de centrifugation alimentées en matière fondue par un dispositif de distribution statique, comme décrit notamment dans les brevets EP-0 465 310 ou EP-0 439 385. Pour certaines compositions de roche, le fibrage peut alternativement se faire par centrifugation au travers d'assiettes percées. La matière en fusion passe dans une filière puis dans des assiettes de fibrage en continu d'où elle ressort sous forme de fils de verre qui sont pulvérisés de polymère (le liant) pour former un matelas. Après ajout des liants et autres des éléments spécifiques à chaque usage, le matelas de laine est polymérisé et calandré.

Aux critères de qualité et de faisabilité industrielle et économique, s'étant ajouté depuis quelques années celui d'un caractère biodégradable de la laine minérale, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation, une composition de laine minérale de type roche adaptée en conséquence a été proposée dans WO 00/17117 ou EP1667939B1, auxquelles on se réfèrera pour plus de précisions sur cette technique.

Le mélange fondu est habituellement préparé par la fusion dans un four de matières premières comprenant de la silice et éventuellement une source secondaire de silicium telle que des fibres minérales recyclées, au moins une source d'alcalino-terreux sous la forme de calcaire (carbonate de calcium) et/ou de dolomie (CaMg(CO₃)₂) et une source d'aluminium telle que la bauxite.

Les documents CN 112 299 701 A, US 6 346 494 B1, WO 02/051766 A1, EP 0 525 816 A1 et Zagar, L. et al., Sprechsaal (114), 01.07.1981, p. 496-512 révèlent par exemple l'utilisation de minéraux naturels comme matières premières pour la fabrication de laine minérale. cours de la fusion, les carbonates dégagent du gaz carbonique dont les bulles contribuent au brassage de la masse en cours de fusion. Par ailleurs, certains carbonates comme la dolomie, avant même de libérer leur CO₂, se divisent en particules plus fines selon le phénomène dit de décrépitation, lequel peut être assez violent et générer des poussières venant encrasser et même corroder les divers conduits équipant les fours (cheminées, régénérateurs, etc). Dans un procédé classique de fabrication de laine de roche, l'émission de CO₂ due à la fusion des matières premières est généralement de l'ordre de 20 à 25% de la masse totale des matières premières utilisées. Par ailleurs, le gaz carbonique est un gaz à effet de serre et il est souhaitable de mettre au point des procédés de fabrication de laine minérale générant le moins de CO₂ possible pour des raisons environnementales, tout en menant à un produit de bonne qualité et pour un coût acceptable.

En plus du dégagement de CO₂ directement lors du procédé de fusion du bain de matières premières, il est donc important de considérer le procédé de fabrication de la laine de roche dans sa globalité, en tenant compte d'autres facteurs comme le coût énergétique de la mise à disposition desdites matières premières en vue de leur utilisation dans le procédé de fabrication de la laine de roche, en particulier si des transformations ou des synthèses sont nécessaires à leur utilisation en tant que matière première.

En résumé, dans un objectif de réduire les coûts énergétiques et optimiser le bilan CO₂, il est important de tenir compte de l'ensemble des étapes aboutissant à la formation des fibres de laine minérale et pas uniquement la dernière étape de fusion du bain de matières premières décrite précédemment.

L'objet de la présente invention est de contribuer à résoudre un tel problème technique en proposant un procédé de fabrication de laine de roche pour lequel les émissions de CO₂ sont effectivement diminués, sur la base de l'ensemble des étapes aboutissant à la formation de la laine de roche et pour lequel les étapes de transformation de matière avant la fusion du bain ont été optimisées.

Ce mélange de matières premières est destiné à être chauffé à une température et dans des conditions permettant sa fusion pour l'obtention d'un bain fondu répondant à ladite composition cible finale de la laine minérale.

L'originalité de la présente invention réside dans le choix des matières premières. En effet, il a été découvert qu'il était possible d'utiliser des oxydes minéraux naturels, c'est-à-dire sous leur composition initiale géologique après leur extraction de leur gisement, en particulier sans altération chimique visant à en modifier la composition initiale, c'est-à-dire des matières minérales non transformées chimiquement comme source de magnésium et/ou de calcium, ce choix conduisant à la diminution du dégagement de CO₂ lors de la réaction de fusion. En particulier, selon le procédé de la présente invention, on se base initialement sur la composition exacte de ces matières minérales géologiques non transformées, telle que déterminée précisément par toute technique adéquate (par exemple analyse chimique, diffraction des rayons X, etc.) pour déterminer la composition du bain initial. Plus précisément, sur la base de cette détermination initiale de la composition de la matière minérale, on calcule et on ajuste les proportions nécessaires en les autres composants du bain initial (tels que la silice, la bauxite, le calcaire ou la dolomie) pour arriver à ladite composition cible ; on arrive de cette manière à minimiser la quantité de CO₂ dégagée, telle que mesurée sur l'ensemble des étapes conduisant à la formation des fibres minérales et à la préparation des matières premières, et pas uniquement sur la base de l'étape finale de fusion du mélange de roches.

Selon l'invention cependant lesdits oxydes minéraux peuvent bien entendu subir des étapes préalables à leur utilisation comme matière première de la fusion mais sans transformation chimique des grains cristallins constituant l'oxyde minéral. De telles étapes peuvent être un concassage, un criblage, un lavage ou encore une flottation, une séparation magnétique ou toute autre séparation physique des impuretés présentes entre lesdits grains de la matière minérale.

Le choix des matières premières précédemment citées est primordial pour obtenir une bonne qualité de la laine minérale notamment après son fibrage. Parmi les propriétés jugées comme essentielles, on peut citer notamment le rendement de la fusion (ratio entre la quantité de laine produite et la quantité de matières premières enfournée), et pour less modes de réalisation dans lesquelles le procédé de fabrication comprend un fibrage par un centrifugeur, la qualité de l'affinage qui se traduit par un nombre minime de bulles résiduelles dans le bain fondu, l'homogénéité du matériau (notamment l'homogénéité en SiO₂), ainsi que le nombre d'infondus.

Plus précisément, la présente invention se rapporte à un procédé de fabrication de laine minérale présentant une composition cible, comprenant la fusion d'un mélange de matières premières constituant un bain de fusion, ladite composition cible répondant aux critères suivants, en pourcentages poids :
SiO₂ : entre 30 et 50%,
Na₂O: entre 0 et 20%,
CaO: entre 6 et 35%,
MgO : entre 1 et 15%,
CaO et MgO : entre 11 et 40% en cumulé,
Al₂O₃ : entre 10 et 27%,
K₂O : entre 0 et 15%,
Oxyde de fer : entre 0,5 et 15%,
autre (s) oxyde (s) : entre 0 et 5 % en cumulé, de préférence moins de 3% le reste étant constitué d'impuretés inévitables,
ledit procédé étant caractérisé en ce qu'il comprend les étapes suivantes :
   a) on sélectionne les matières premières dudit bain de fusion dont au moins:
      - une source de silicium notamment choisie parmi la silice, un basalte, des fibres minérales recyclées ou leurs mélanges, de préférence la silice, de préférence au moins un basalte,
      - optionnellement au moins une source de sodium de préférence choisie parmi l'hydroxyde de sodium NaOH, le carbonate de sodium Na₂CO₃ ou un mélange de d'hydroxyde de sodium NaOH et de carbonate de calcium Na₂CO₃,
      - au moins une source de calcium choisie parmi un silicate de calcium minéral naturel comprenant, en pourcentage poids, plus de 30% de SiO₂ et plus de 10% de CaO, CaO et SiO₂ représentant ensemble plus de 70% du poids dudit silicate, et/ou
      - au moins une source de magnésium choisi parmi un silicate de magnésium minéral naturel comprenant, en pourcentage poids, plus de 30% de SiO₂ et plus de 10% de MgO, MgO et SiO₂ représentant ensemble plus de 70% du poids dudit silicate, lesdites sources de calcium et/ou de magnésium étant des matières minérales naturelles, c'est à dire issues d'un milieu géologique naturel et non transformées,
      - optionnellement du calcaire CaCO₃
      - optionnellement une source complémentaire d'aluminium telle que la bauxite,
      - optionnellement une source complémentaire de magnésium tel qu'un oxyde de magnésium,
      - optionnellement une source complémentaire de fer tel qu'un oxyde de fer,
   b) on détermine la composition desdites sources de calcium et/ou de magnésium et/ou d'aluminium naturelles,
   c) sur la base de la ou lesdites compositions déterminées selon le point b), on détermine les quantités nécessaires en lesdites matières premières pour obtenir un mélange de ladite composition cible,
   d) on effectue le mélange desdites matières selon lesdites quantités,
   e) on effectue la fusion, le fibrage dudit mélange et son refroidissement dans les conditions permettant l'obtention de ladite laine minérale.

Selon des modes particuliers et avantageux de la présente invention qui peuvent bien entendu le cas échéant être combinés entre eux :
- Une source de calcium est un silicate de calcium minéral naturel comprenant, en pourcentage poids, plus de 30% de SiO₂ et plus de 15% de CaO, CaO et SiO₂ représentant ensemble plus de 70% du poids dudit silicate, de préférence plus de 75% ou même plus de 80% du poids dudit silicate.
- Une source de magnésium est un silicate de magnésium minéral naturel comprenant, en pourcentage poids, plus de 30% de SiO₂ et plus de 15% de MgO, MgO et SiO₂ représentant ensemble plus de 70% du poids dudit silicate, de préférence plus de 75% ou même plus de 80% du poids dudit silicate.
- On utilise une source de calcium telle que précédemment décrite et une source de magnésium telle que précédemment décrite.
- Ladite source de magnésium est une matière minérale naturelle répondant à la composition suivante, en pourcentages poids :
   - SiO₂ : entre 40 et 55%, de préférence entre 45 et 50%,
   - Al₂O₃ : entre 0 et 10%, par exemple entre 1 et 10%
   - MgO : entre 20 et 40%, de préférence entre 25 et 35%,
   - MgO et SiO₂ représentant en cumulé de préférence au moins 70%, voire au moins 75%,
   - Fe₂O₃ : entre 0 et 4%, par exemple entre 1 et 3%
   - moins de 5% d'autres oxydes, de préférence moins de 3% d'autres oxydes
   - éventuellement de l'eau, notamment présente dans ladite source sous forme d'hydroxyde(s), de préférence dans une quantité inférieure à 20% et notamment comprise entre 5 et 15%.
- Ladite source de magnésium est une matière minérale naturelle répondant à la composition suivante, en pourcentages poids :
   - SiO₂ : entre 55 et 70%, de préférence entre 58 et 65%,
   - Al₂O₃ : entre 0 et 10%, par exemple entre 1 et 10%
   - MgO : entre 20 et 40%, de préférence entre 25 et 35%,
   - MgO et SiO₂ représentant en cumulé de préférence au moins 85%, voire au moins 90%,
   - Fe₂O₃ : entre 0 et 4%, par exemple entre 0,5 et 2%,
   - moins de 5% d'autres oxydes, de préférence moins de 3% d'autres oxydes,
   - éventuellement de l'eau, notamment présente dans ladite source sous forme d'hydroxyde(s), de préférence dans une quantité inférieure à 20% et notamment comprise entre 5 et 15%.
- Ladite source de magnésium est une matière minérale naturelle répondant à la composition suivante, en pourcentages poids :
   - SiO₂ : entre 30 et 50%, de préférence entre 35 et 45%,
   - Al₂O₃ : entre 0 et 10%, par exemple entre 1 et 5%
   - MgO : entre 25 et 45%, de préférence entre 30 et 40%,
   - MgO et SiO₂ représentant en cumulé de préférence au moins 70%, voire au moins 75%,
   - Fe₂O₃ : entre 0 et 10%, par exemple entre 5 et 10%
   - moins de 5% d'autres oxydes, de préférence moins de 3% d'autres oxydes
   - éventuellement de l'eau, notamment présente dans ladite source sous forme d'hydroxyde(s), de préférence dans une quantité inférieure à 20% et notamment comprise entre 5 et 15%.
- Ladite source de calcium est une matière minérale naturelle répondant à la composition suivante, en pourcentages poids :
   - SiO₂ : entre 30 et 55%, de préférence entre 35 et 50%,
   - CaO : entre 35 et 55%, de préférence entre 40 et 50%,
   - CaO et SiO₂ représentant en cumulé de préférence au moins 80%, voire au moins 85%,
   - Fe₂O₃ : entre 0 et 4%, par exemple entre 0,1 et 0,5%
   - Al₂O₃ : entre 0 et 5%, par exemple entre 0,5 et 2%
   - CO₂ : entre 0 et 20%, notamment entre 5 et 15%
   - moins de 5% d'autres oxydes, de préférence moins de 3% d'autres oxydes.
- Ladite source de calcium est une matière minérale naturelle répondant à la composition suivante, en pourcentages poids :
   - SiO₂ : entre 40 et 55%, de préférence entre 40 et 50%,
   - CaO : entre 10 et 20%,
   - CaO et SiO₂ représentant en cumulé de préférence au moins 55%, voire au moins 60%,
   - Al₂O₃ : entre 10 et 40%, par exemple entre 25 et 35%
   - Fe₂O₃ : entre 0 et 4%, par exemple entre 0,1 et 1%
   - moins de 5% d'autres oxydes, de préférence moins de 3% d'autres oxydes.
- On utilise comme matière première au moins une source de magnésium telle que décrite précédemment et au moins une source de calcium telle que décrite précédemment.
- On utilise comme matières premières les deux sources de calcium telles que décrites précédemment.
- Ladite source de calcium est une matière minérale naturelle choisie parmi les roches basaltiques.
- Ladite source de magnésium et/ou de calcium est une matière minérale naturelle répondant à la composition suivante, en pourcentages poids :
   - SiO₂ : entre 40 et 60%, de préférence entre 42 et 55%,
   - CaO : entre 5 et 25%, de préférence entre 10 et 20%
   - MgO : entre 3 et 20%, de préférence entre 5 et 15%,
   - Al₂O₃ : entre 0 et 20%, par exemple entre 5 et 15%
   - Fe₂O₃ : entre 0 et 20%, par exemple entre 5 et 15%
   - moins de 5% d'autres oxydes, de préférence moins de 3% d'autres oxydes
   - entre 0 et 5% d'eau, notamment présente dans ladite source sous forme d'hydroxyde(s).
- On utilise comme matière première au moins une source de magnésium telle que décrite précédemment et comme source de magnésium et/ou de calcium une matière minérale naturelle choisie parmi les roches basaltiques telle que décrite précédemment.
- On utilise comme matière première au moins une source de calcium telle que décrite précédemment, de préférence les deux sources de calcium telles que décrites précédemment, et comme source de magnésium et/ou de calcium une matière minérale naturelle choisie parmi les roches basaltiques telle que décrite précédemment.
- L'ensemble des silicates présents dans le bain représente plus de 20% du poids total dudit bain hormis la silice et le calcin s'ils sont présents, de préférence plus de 30%, voire plus 40% ou même plus de 45% du poids total dudit bain hormis la silice et le calcin, voire même plus de 50% du poids total dudit bain hormis la silice et le calcin.
- On introduit dans le bain de fusion des fibres minérales recyclées, les fibres minérales recyclées représentant de préférence entre 1 et 50% du poids total du bain de fusion, de préférence entre 3 et 40% du poids total du bain de fusion.
- ladite composition cible répond aux critères suivants, en pourcentages poids :
   SiO₂ : entre 30 et 50%, de préférence entre 35 et 45%,
   Na₂O: entre 0 et 10%, de préférence entre 0,4 et 7%,
   CaO: entre 10 et 35%, de préférence entre 12 et 25%,
   MgO : entre 1 et 15%, de préférence entre 5 et 13%,
   CaO+MgO : entre 11 et 40% en cumulé,
   Al₂O₃ : entre 10 et 27%,
   K₂O : entre 0 et 2%, de préférence entre 0 et 1%,
   Oxyde de fer : entre 0,5 et 15%, de préférence entre 3 et 12%,
   autre (s) oxyde (s) : entre 0 et 5 % en cumulé, de préférence moins de 3%,
   le reste étant constitué d'impuretés inévitables.
- Ladite composition cible précédente répond aux critères suivants, en pourcentages poids :
   SiO₂ : entre 30 et 50%
   Al₂O₃ ; entre 10 et 20%
   CaO+MgO : entre 20 et 40 % en cumulé
   Na₂O+K₂O : entre 1 et 10 %
- Ladite composition cible répond aux critères suivants, en pourcentages poids :
   - SiO₂ entre 39 et 50%
   - Al₂O₃ entre 16 et 27%
   - CaO entre 6 et 20%
   - MgO entre 1 et 5%
   - Na₂O entre 0 et 20%
   - K₂O entre 0 et 15%
   - P₂O₅ entre 0 et 3%
   - Fe₂O₃ entre 1,5 et 15%
   - B₂O₃ entre 0 et 2%
   - TiO₂ entre 0 et 2%.
- Ladite composition cible précédente répond aux critères suivants, en pourcentages poids :
   - moins de 9%, en cumulé de Na₂O et de K₂O (Na2O+K2O > 9%) et/ou
   - moins de 20% en cumulé de MgO et de CaO (MgO+CaO < 20%) L'invention se rapporte également au mélange de matières premières tel que décrit précédemment.

Les hydroxydes (OH) éventuellement présents dans les matières minérales naturelles sont considérés selon la présente invention comme des oxydes et comme faisant partie de la composition chimique de la source, au contraire de l'eau libre (c'est à dire présente sous forme d'humidité dans la matière minérale naturelle).

On a ainsi pu obtenir des fibres minérales de laine de roche sans défauts à partir du mélange initial selon l'invention comme il sera montré dans les exemples qui suivent.

Selon l'invention, on introduit le moins possible de carbonate, voire aucun carbonate dans le mélange de matières premières. De préférence, la somme du poids de carbonate d'alcalin et de carbonate d'alcalino-terreux est inférieure à 50%, et de préférence inférieure à 30%, et de préférence inférieure à 10%, et de préférence inférieure à 5% en poids, voire est nulle dans le mélange de matières premières. Selon un mode possible avantageux, le mélange de matières premières est exempt de tout carbonate. Il est avantageusement apte à ne dégager sensiblement aucun oxyde de carbone lors de son chauffage et sa fusion en laine minérale.

Une des matières premières porteuses de silicium peut être introduite dans le mélange de matières premières sous forme de sable en tant que source principale ou secondaire de silicium. Egalement une source de silicium principale ou secondaire peut consister en du calcin verrier.

Une éventuelle matière première porteuse d'aluminium peut être introduite dans le mélange de matières premières sous forme de bauxite Al₂O₃ ou encore de poudre de feldspath tel que la phonolite ou la Népheline (syénite), en tant que source principale ou secondaire d'aluminium.

Une éventuelle matière première porteuse de fer peut être introduite dans le mélange de matières premières sous forme de bauxite oxyde de fer en tant que source principale ou secondaire de fer.

Le mélange de matières premières est chauffé jusqu'à l'obtention d'un bain fondu, généralement dans un four. On chauffe plus ou moins haut en température et plus ou moins longtemps selon la qualité de fibres minérales que l'on cherche, notamment selon le degré de tolérance en particules non fondues (appelées « infondus »). Généralement, la température de chauffage du mélange initial est comprise entre 1200 et 1700°C pour sa fusion complète. Pour la transformation du mélange de matières premières, on peut faire appel aux techniques de fusion bien connues de l'homme du métier. Cette transformation peut être réalisée dans tout type de four comme un four électrique à électrodes, un four à brûleurs aériens comme un four à brûleurs transversaux ou un four à boucle, ou encore un four à brûleurs immergés.

Pour le chauffage et la fusion, le mélange de matières premières, peut être introduit dans un four à l'état pulvérulent, ce qui implique que chaque matière première qu'il contient est à l'état de poudre ou encore sous forme de briquettes, l'introduction pouvant se faire en une ou plusieurs étapes. Pour le chauffage et la fusion, le mélange de matières premières peut être introduit dans un four à l'état de composition comprenant du calcin et le mélange de matières premières, ce dernier étant le cas échéant pulvérulent.

Les exemples qui suivent, donnés purement à titre illustratif, montrent les avantages obtenus par application de la présente invention.

### Exemples

**Selon une première série d'exemples,** on prépare différents mélanges de matière premières afin de comparer un mélange tel qu'actuellement utilisé pour la fabrication de laine de roche pour une composition identique, laquelle a sensiblement la formulation suivante en pourcentage poids d'oxydes:

**[Table 1]**

| **Eléments** | **Pourcentage poids%** |
|---|---|
| SiO₂ | 39 |
| CaO | 32,5 |
| MgO | 6,5 |
| Al₂O₃ | 18,6 |
| Fe₂O₃ | 0,9 |
| Na₂O | 0,5 |
| K₂O | 0,3 |
| TiO₂ | 0,6 |
| autres (cumulé) | <2% |

### Exemple 1 (art antérieur)

Selon un premier exemple on synthétise une composition minérale typique de laine de roche répondant à la formulation précédente, selon les techniques actuelles.

Le tableau 2 ci-dessous donne les proportions des différentes matières premières (en pourcentage poids) et la composition finale du mélange ainsi obtenu, aux impuretés près :

**[Table 2]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 349,80 | 99,60 | 0,05 | | 0,01 | 0,03 | | 0,03 | 0,49 | | |
| bauxite | Al₂O₃ | 237,50 | 14,20 | 77,51 | 0,26 | 0,23 | 0,61 | 0,43 | 2,53 | 3,42 | | |
| Oxyde-fer | Fe₂O₃ | 1,90 | 1,04 | 0,18 | 0,81 | 0,01 | 0,23 | 0,22 | 97,11 | 0,45 | | |
| Na-carbonate | Na₂CO₃ | 8,50 | | | 58,32 | | 0,10 | | | | 41,49 | |
| Calcaire | CaCO₃ | 428,00 | 0,54 | 0,08 | 0,19 | 0,01 | 55,33 | 0,27 | 0,05 | | 44,11 | |
| Dolomie | CaMg(CO₃)₂ | 293,50 | 1,88 | 0,48 | 0,28 | 0,09 | 29,52 | 21,40 | 0,28 | 0,02 | 47,80 | |
| Composition finale roche (% poids) | | | 39,0 | 18,6 | 0,7 | 0,1 | 32,5 | 6,5 | 0,9 | 1,0 | | |

Le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est de 332 grammes.

### Exemple 2 :

Dans cet exemple le mélange de matières premières est cette fois tel que décrit dans le tableau 3 ci-dessous.

Dans ce mélange initial on a introduit comme réactif, pour remplacer la dolomie, une matière minérale naturelle d'un oxyde de magnésium et de silicium « Luzenac », directement issue d'une carrière située à Luzenac en France. L'analyse de cette matière par les techniques chimiques classiques et de diffraction X montre que cette matière minérale est constituée essentiellement par un mélange de chlorite Mg_{4,882}Fe_{0,22}Al_{1,88}1Si_{2,96}O₁₀(OH)₈ (55% poids), de talc Mg₃S₁₄O₁₀(OH)₂ (42% poids) et de moins de 5% poids de dolomie.

Les hydroxydes sont considérés selon la présente invention comme faisant partie de la composition chimique de la source, au contraire de l'eau libre (c'est à dire présente sous forme d'humidité dans la matière minérale naturelle). Ils sont reportés dans le tableau ci-dessous en équivalent H₂O.

Cette matière minérale est directement introduite, sans aucune transformation chimique et après un simple broyage visant à en adapter la granulométrie, avec les autres constituants dans des proportions ajustées en conséquence pour l'obtention d'un bain fondu d'oxydes de composition très proche de celle de l'exemple 1 de référence, et pour minimiser le dégagement de CO₂.

**[Table 3]**

| | | bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 261,00 | 99,60 | 0,05 | | 0,01 | 0,03 | | 0,03 | 0,49 | | |
| bauxite | Al₂O₃ | 219,20 | 14,20 | 77,51 | 0,26 | 0,23 | 0,61 | 0,43 | 2,53 | 3,42 | | |
| Oxyde-fer | Fe₂O₃ | 0,20 | 1,04 | 0,18 | 0,81 | 0,01 | 0,23 | 0,22 | 97,11 | 0,45 | | |
| Na-carbonate | Na₂CO₃ | 10,00 | | | 58,32 | | 0,10 | | | | 41,49 | |
| Calcaire | CaCO₃ | 582,40 | 0,54 | 0,08 | 0,19 | 0,01 | 55,33 | 0,27 | 0,05 | | 44,11 | |
| « Luzenac » | | 196,5 | 48,80 | 7,90 | | | 0,67 | 31,8 | 1,49 | 0,3 | | 8,54 |
| Composition finale (% poids) | | | 39,0 | 18,6 | 0,75 | 0,1 | 32,5 | 6,5 | 0,9 | 0,9 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 261 grammes, soit une diminution de 22% par rapport à l'exemple de référence.

### Exemple 3 :

Dans cet exemple le mélange de matières premières est cette fois tel que décrit dans le tableau 4 ci-dessous.

Dans ce mélange initial on a introduit comme réactif, pour remplacer la dolomie, une autre matière minérale naturelle d'un oxyde de magnésium et de silicium directement issue d'une carrière « Trimouns » également située à Luzenac en France. L'analyse de cette matière par les techniques classiques montre que cette matière minérale brute est constituée essentiellement par un autre mélange de chlorite Mg_{4,882}Fe_{0,22}Al_{1,88}1Si_{2,960}O₁₀(OH)₈ et de talc Mg₃Si₄O₁₀(OH)₂.

Cette matière est directement introduite, sans aucune transformation chimique et après un simple broyage visant à en adapter la granulométrie, en mélange avec les autres constituants dans des proportions ajustées en conséquence pour l'obtention d'un bain fondu d'oxydes de composition très proche de celle de l'exemple 1 de référence.

**[Table 4]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 231,71 | 99,60 | 0,05 | | 0,01 | 0,03 | | 0,03 | 0,49 | | |
| bauxite | Al₂O₃ | 238,70 | 14,20 | 77,51 | 0,26 | 0,23 | 0,61 | 0,43 | 2,53 | 3,42 | | |
| Oxyde-fer | Fe₂O₃ | 1,30 | 1,04 | 0,18 | 0,81 | 0,01 | 0,23 | 0,22 | 97,11 | 0,45 | | |
| Na-carbonate | Na₂CO₃ | 9,70 | | | 58,32 | | 0,10 | | | | 41,49 | |
| Calcaire | CaCO₃ | 584,50 | 0,54 | 0,08 | 0,19 | 0,01 | 55,33 | 0,27 | 0,05 | | 44,11 | |
| « Trimouns » | | 198 | 61,67 | 0,19 | | | 0,02 | 31,52 | 0,68 | | | 4,84 |
| Composition finale (% poids) | | | 39,0 | 18,6 | 0,7 | 0,1 | 32,5 | 6,5 | 0,9 | 0,9 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 262 grammes, soit une diminution de 21% par rapport à l'exemple de référence.

### Exemple 4 :

Dans cet exemple le mélange de matières premières est cette fois tel que décrit dans le tableau 5 ci-dessous.

Dans ce mélange initial on a introduit comme réactif, pour remplacer la dolomie, une autre matière minérale naturelle d'un silicate de magnésium directement issue d'une carrière située à Carino en Espagne. La composition en oxydes de cette matière minérale est donnée ci-après.

**[Table 5]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 288,0 | 99,6 | 0,05 | | 0,01 | 0,03 | | 0,03 | 0,5 | | |
| bauxite | Al₂O₃ | 233,8 | 14,2 | 77,5 | 0,3 | 0,23 | 0,61 | 0,43 | 2,53 | 3,42 | | |
| Oxyde-fer | Fe₂O₃ | 1,30 | 1,04 | 0,18 | 0,81 | 0,01 | 0,23 | 0,22 | 97,11 | 0,45 | | |
| Na-carbonate | Na₂CO₃ | 9,40 | | | 58,32 | | 0,10 | | | | 41,49 | |
| Calcaire | CaCO₃ | 580,00 | 0,54 | 0,08 | 0,19 | 0,01 | 55,33 | 0,27 | 0,05 | | 44,11 | |
| « Carino » | | 170,8 | 39,1 | 2,4 | 0,04 | 0,05 | 1,50 | 36,5 | 8,2 | | | 12,15 |
| Composition finale (% poids) | | | 39,0 | 18,6 | 0,7 | 0,1 | 32,5 | 6,5 | 2,2 | 0,1 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 260 grammes, soit une diminution de 22% par rapport à l'exemple de référence.

### Exemple 5 :

Dans cet exemple le mélange de matières premières est cette fois tel que décrit dans le tableau 6 ci-dessous.

Dans ce mélange initial on a introduit comme réactif la matière minérale naturelle « Luzenac » décrit dans l'exemple 2 qui précède et d'un silicate de calcium et d'aluminium issu d'une carrière « Hudson» au Groenland. L'analyse montre que ces deux matières minérales naturelles répondent à la composition décrite dans le tableau 6 ci-dessous :

**[Table 6]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 41,30 | 99,60 | 0,05 | | 0,01 | 0,03 | | 0,03 | 0,49 | | |
| Oxyde-fer | Fe₂O₃ | 2,10 | 1,04 | 0,18 | 0,81 | 0,01 | 0,23 | 0,22 | 97,11 | 0,45 | | |
| Oxyde-Ti | TiO₂ | 5,20 | | | | | | | | 99,00 | | |
| Calcaire | CaCO₃ | 431,30 | 0,54 | 0,08 | 0,19 | 0,01 | 55,33 | 0,27 | 0,05 | | 44,11 | |
| « Hudson» | | 527,80 | 47,30 | 32,20 | 1,79 | 0,27 | 16,10 | 0,12 | 0,72 | 0,03 | | |
| « Luzenac » | | 198,6 | 48,80 | 7,90 | | | 0,68 | 31,8 | 1,49 | 0,28 | | 8,54 |
| Composition finale (% poids) | | | 39,0 | 18,6 | 1,0 | 0,15 | 32,5 | 6,5 | 0,9 | 0,6 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 190 grammes, soit une diminution de 43% par rapport à l'exemple de référence.

### Exemple 6:

Dans cet exemple le mélange de matières premières est cette fois tel que décrit dans le tableau 7 ci-dessous.

Plus précisément on a utilisé dans cet exemple comme source minérale de magnésium et de calcium les matières minérales naturelles décrites dans l'exemple 5 qui précède, ainsi qu'une autre matière minérale naturelle d'un silicate de magnésium directement issue d'une carrière située à Hermosillo au Mexique.

**[Table 7]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 9,00 | 99,60 | 0,05 | | 0,01 | 0,03 | | 0,03 | 0,49 | | |
| Oxyde-fer | Fe₂O₃ | 1,95 | 1,04 | 0,18 | 0,81 | 0,01 | 0,23 | 0,22 | 97,11 | 0,45 | | |
| Calcaire | CaCO₃ | 365,50 | 0,54 | 0,08 | 0,19 | 0,01 | 55,33 | 0,27 | 0,05 | | 44,11 | |
| « Hermosillo » | | 81,70 | 40,50 | 0,43 | 0,06 | 0,08 | 46,50 | 0,60 | 0,24 | | 11,54 | 0,12 |
| « Hudson » | | 527,40 | 47,30 | 32,20 | 1,79 | 0,27 | 16,10 | 0,12 | 0,72 | 0,03 | | |
| « Luzenac » | | 197,6 | 48,76 | 7,904 | | | 0,683 | 31,8 | 1,484 | 0,28 | | 8,54 |
| Composition finale (% poids) | | | 39,0 | 18,6 | 1,0 | 0,15 | 32,7 | 6,5 | 0,9 | 0,6 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 170 grammes, soit une diminution de 49% par rapport à l'exemple de référence.

### Exemple 7:

Dans cet exemple le mélange de matières premières est cette fois tel que décrit dans le tableau 8 ci-dessous.

Plus précisément on a utilisé dans cet exemple comme première source de calcium la matière minérale précédemment décrite issue de la carrière « Hudson » et comme seconde source de calcium la matière minérale précédemment décrite issue de la carrière « Hermosillo ». La source de magnésium complémentaire est un périclase MgO.

**[Table 8]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 75,00 | 99,60 | 0,05 | | 0,01 | 0,03 | | 0,03 | 0,49 | | |
| bauxite | Al₂O₃ | 187,80 | 14,20 | 77,51 | 0,26 | 0,23 | 0,61 | 0,43 | 2,53 | 3,42 | | |
| Oxyde-fer | Fe₂O₃ | 1,20 | 1,04 | 0,18 | 0,81 | 0,01 | 0,23 | 0,22 | 97,11 | 0,45 | | |
| « Hermosillo » | | 572,00 | 40,50 | 0,43 | 0,06 | 0,08 | 46,50 | 0,60 | 0,24 | | 11,54 | 0,12 |
| « Hudson » | | 117,00 | 47,30 | 32,20 | 1,79 | 0,27 | 16,10 | 0,12 | 0,72 | 0,03 | | |
| Periclase--CaO | CaO-MgO | 103,4 | 1,42 | 0,72 | 0,1 | 0,02 | 38,2 | 58,2 | 0,55 | | | 1,13 |
| Composition finale (% poids) | | | 39,0 | 18,6 | 0,3 | 0,1 | 32,6 | 6,5 | 0,9 | 0,7 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 66 grammes, soit une diminution de 80% par rapport à l'exemple de référence.

**Selon une seconde série d'exemples,** on prépare différents mélanges de matière premières afin de comparer un mélange tel qu'actuellement utilisé pour la fabrication de laine de roche pour une composition finale identique :

**[Table 9]**

| **Eléments** | **Pourcentage poids%** |
|---|---|
| SiO₂ | 39,5 |
| CaO | 17,4 |
| MgO | 10,6 |
| Al₂O₃ | 15,3 |
| Fe₂O₃ | 10,0 |
| Na₂O | 4,1 |
| K₂O | 0,1 |
| TiO₂ | 1,7 |

### Exemple 8 (art antérieur)

Selon un exemple de référence on synthétise une composition minérale typique de laine de roche répondant à la composition précédente, selon les techniques actuelles et les matières premières habituellement utilisées.

Le tableau 10 ci-dessous donne les proportions des différentes matières premières et la composition finale du mélange ainsi obtenu :

**[Table 10]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 358,40 | 99,60 | 0,05 | | 0,01 | 0,03 | | 0,03 | 0,49 | | |
| bauxite | Al₂O₃ | 193,80 | 14,20 | 77,51 | 0,26 | 0,23 | 0,61 | 0,43 | 2,53 | 3,42 | | |
| Oxyde-fer | Fe₂O₃ | 96,40 | 1,04 | 0,18 | 0,81 | 0,01 | 0,23 | 0,22 | 97,11 | 0,45 | | |
| Oxyde-Ti | TiO₂ | 8,70 | | | | | | | | 99,00 | | |
| Na-carbonate | Na₂CO₃ | 65,80 | | | 58,32 | | 0,10 | | | | 41,49 | |
| Calcaire | CaCO₃ | 50,30 | 0,54 | 0,08 | 0,19 | 0,01 | 55,33 | 0,27 | 0,05 | | 44,11 | |
| Dolomie | CaMg(CO₃)₂ | 489,70 | 1,88 | 0,48 | 0,28 | 0,09 | 29,52 | 21,40 | 0,28 | 0,02 | 47,80 | |
| Composition finale (% poids) | | | 39,50 | 15,3 | 4,1 | 0,09 | 17,4 | 10,6 | 10,0 | 1,75 | | |

Le mélange de matières premières est porté sous air en creuset de platine en 1 h jusqu'à 1400°C puis jusqu'à fusion du mélange à 1430°C avec un palier d'une heure à la température maximale. La quantité de CO₂ dégagée est de 283 grammes.

### Exemple 9 :

Dans cet exemple le mélange de matières premières est cette fois tel que décrit dans le tableau 11 ci-dessous.

Plus précisément on a utilisé dans cet exemple comme source minérale une roche basaltique issue de la carrière de Cluis en France. Cette matière est directement introduite, sans aucune transformation chimique et après un simple broyage visant à en adapter la granulométrie, en mélange avec les autres constituants dans des proportions ajustées en conséquence pour l'obtention d'un mélange fondu de composition très proche de celle de l'exemple 8 de référence.

**[Table 11]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Basalte « Cluis » | | 841,10 | 45,92 | 14,83 | 2,58 | 0,39 | 12,77 | 7,61 | 11,48 | 1,39 | | 2,85 |
| bauxite | Al₂O₃ | 35,20 | 14,20 | 77,51 | 0,26 | 0,23 | 0,61 | 0,43 | 2,53 | 3,42 | | |
| Oxyde-fer | Fe₂O₃ | 2,10 | 1,04 | 0,18 | 0,81 | 0,01 | 0,23 | 0,22 | 97,11 | 0,45 | | |
| Oxyde-Ti | TiO₂ | 4,60 | | | | | | | | 99,00 | | |
| Na-carbonate | Na₂CO₃ | 27,60 | | | 58,32 | | 0,10 | | | | 41,49 | |
| Calcaire | CaCO₃ | 15,60 | 0,54 | 0,08 | 0,19 | 0,01 | 55,33 | 0,27 | 0,05 | | 44,11 | |
| Dolomie | CaMg(CO₃)₂ | 195,40 | 1,88 | 0,48 | 0,28 | 0,09 | 29,52 | 21,40 | 0,28 | 0,02 | 47,80 | |
| Composition finale (% poids) | | | 39,50 | 15,30 | 3,85 | 0,35 | 17,40 | 10,60 | 10,00 | 1,75 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 112 grammes, soit une diminution de 61 % par rapport à l'exemple 8 de référence.

### Exemple 10 :

Dans cet exemple le mélange de matières premières est cette fois tel que décrit dans le tableau 12 ci-dessous.

Dans ce mélange initial on a introduit comme réactif, pour remplacer la dolomie, la matière minérale naturelle « Luzenac » décrite précédemment.

Cette matière est directement introduite, sans aucune transformation chimique et après un simple broyage visant à en adapter la granulométrie, en mélange avec les autres constituants dans des proportions ajustées en conséquence pour l'obtention d'un mélange de composition très proche de celle de l'exemple 8 de référence.

**[Table 12]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 210,10 | 99,60 | 0,05 | | 0,01 | 0,03 | | 0,03 | 0,49 | | |
| bauxite | Al₂O₃ | 163,30 | 14,20 | 77,51 | 0,26 | 0,23 | 0,61 | 0,43 | 2,53 | 3,42 | | |
| Oxyde-fer | Fe₂O₃ | 93,50 | 1,04 | 0,18 | 0,81 | 0,01 | 0,23 | 0,22 | 97,11 | 0,45 | | |
| Oxyde-Ti | TiO₂ | 9,60 | | | | | | | | 99,00 | | |
| Na-carbonate | Na₂CO₃ | 68,30 | | | 58,32 | | 0,10 | | | | 41,49 | |
| Calcaire | CaCO₃ | 308,00 | 0,54 | 0,08 | 0,19 | 0,01 | 55,33 | 0,27 | 0,05 | | 44,11 | |
| « Luzenac » | | 328 | 48,76 | 7,904 | | | 0,683 | 31,8 | 1,484 | 0,28 | | 8,54 |
| Composition finale (% poids) | | | 39,50 | 15,30 | 4,16 | 0,04 | 17,40 | 10,60 | 10,00 | 1,75 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 164 grammes, soit une diminution de 42% par rapport à l'exemple 8 de référence.

### Exemple 11 :

Dans cet exemple le mélange de matières premières est cette fois tel que décrit dans le tableau 13 ci-dessous.

Dans ce mélange initial on a introduit comme réactif, pour remplacer la dolomie, une autre matière minérale naturelle d'un silicate de magnésium et de fer directement issue d'une carrière située à Carino en Espagne. La composition en oxydes de cette matière minérale est donnée ci-après.

**[Table 13]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Sable | SiO₂ | 255,30 | 99,60 | 0,05 | | 0,01 | 0,03 | | 0,03 | 0,49 | | |
| bauxite | Al₂O₃ | 187,80 | 14,20 | 77,51 | 0,26 | 0,23 | 0,61 | 0,43 | 2,53 | 3,42 | | |
| Oxyde-fer | Fe₂O₃ | 73,70 | 1,04 | 0,18 | 0,81 | 0,01 | 0,23 | 0,22 | 97,11 | 0,45 | | |
| Oxyde-Ti | TiO₂ | 9,60 | | | | | | | | 99,00 | | |
| Na-carbonate | Na₂CO₃ | 68,00 | | | 58,32 | | 0,10 | | | | 41,49 | |
| Calcaire | CaCO₃ | 304,10 | 0,54 | 0,08 | 0,19 | 0,01 | 55,33 | 0,27 | 0,05 | | 44,11 | |
| « Carino » | | 285,2 | 39,138 | 2,44 | 0,04 | 0,048 | 1,498 | 36,526 | 8,234 | | | 12,15 |
| Composition finale (% poids) | | | 39,50 | 15,30 | 4,14 | 0,06 | 17,40 | 10,60 | 10,00 | 1,75 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 162 grammes, soit une diminution de 43% par rapport à l'exemple 8 de référence.

### Exemple 12 :

Dans cet exemple le mélange de matières premières est cette fois tel que décrit dans le tableau 14 ci-dessous.

Dans ce mélange initial on a introduit comme réactif la matière minérale naturelle basaltique décrite dans l'exemple 9 qui précède et le composé minéral Carino décrit dans l'exemple 11.

**[Table 14]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Basalte « Cluis | | 724,30 | 45,92 | 14,83 | 2,58 | 0,39 | 12,77 | 7,61 | 11,48 | 1,39 | | 2,85 |
| bauxite | Al₂O₃ | 54,30 | 14,20 | 77,51 | 0,26 | 0,23 | 0,61 | 0,43 | 2,53 | 3,42 | | |
| Oxyde-fer | Fe₂O₃ | 4,20 | 1,04 | 0,18 | 0,81 | 0,01 | 0,23 | 0,22 | 97,11 | 0,45 | | |
| Oxyde-Ti | TiO₂ | 5,60 | | | | | | | | 99,00 | | |
| Na-carbonate | Na₂CO₃ | 33,90 | | | 58,32 | | 0,10 | | | | 41,49 | |
| Calcaire | CaCO₃ | 142,90 | 0,54 | 0,08 | 0,19 | 0,01 | 55,33 | 0,27 | 0,05 | | 44,11 | |
| « Carino » | | 137,70 | 39,14 | 2,44 | 0,04 | 0,05 | 1,50 | 36,5 | 8,23 | | | 12,15 |
| Composition finale (% poids) | | | 39,50 | 15,30 | 3,90 | 0,30 | 17,40 | 10,60 | 10,00 | 1,75 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 77 grammes, soit une diminution de 73% par rapport à l'exemple 8 de référence.

### Exemple 13:

Dans cet exemple le mélange de matières premières est cette fois tel que décrit dans le tableau 15 ci-dessous.

Plus précisément on a utilisé dans cet exemple comme source minérale de magnésium et de calcium les matières minérales naturelles décrites dans l'exemple 12 qui précède, ainsi qu'une autre matière minérale naturelle du silicate de magnésium directement issue d'une carrière située à Hermosillo au Mexique.

**[Table 15]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Basalte « Cluis » | | 447,00 | 45,92 | 14,83 | 2,58 | 0,39 | 12,77 | 7,61 | 11,48 | 1,39 | | 2,85 |
| bauxite | Al₂O₃ | 105,00 | 14,20 | 77,51 | 0,26 | 0,23 | 0,61 | 0,43 | 2,53 | 3,42 | | |
| Oxyde-fer | Fe₂O₃ | 30,50 | 1,04 | 0,18 | 0,81 | 0,01 | 0,23 | 0,22 | 97,11 | 0,45 | | |
| Oxyde-Ti | TiO₂ | 7,50 | | | | | | | | 99,00 | | |
| Na-carbonate | Na₂CO₃ | 47,00 | | | 58,32 | | 0,10 | | | | 41,49 | |
| « Hermosillo » | | 244,00 | 40,50 | 0,43 | 0,06 | 0,08 | 46,50 | 0,60 | 0,24 | | 11,54 | 0,12 |
| « Carino » | | 192,00 | 39,14 | 2,44 | 0,04 | 0,05 | 1,50 | 36,53 | 8,23 | | | 12,15 |
| Composition finale (% poids) | | | 39,45 | 15,35 | 3,97 | 0,23 | 17,42 | 10,61 | 10,00 | 1,74 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 48 grammes, soit une diminution de 83% par rapport à l'exemple 8 de référence.

### Exemple 14:

Dans cet exemple le mélange de matières premières est cette fois tel que décrit dans le tableau 16 ci-dessous.

Plus précisément on a utilisé dans cet exemple comme source minérale les composés décrits dans l'exemple 13 qui précède et on a utilisé de l'hydroxyde de sodium comme source de sodium.

**[Table 16]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Basalte « Cluis » | | 447,00 | 45,92 | 14,83 | 2,58 | 0,39 | 12,77 | 7,61 | 11,48 | 1,39 | | 2,85 |
| bauxite | Al₂O₃ | 105,00 | 14,20 | 77,51 | 0,26 | 0,23 | 0,61 | 0,43 | 2,53 | 3,42 | | |
| Oxyde-fer | Fe₂O₃ | 30,50 | 1,04 | 0,18 | 0,81 | 0,01 | 0,23 | 0,22 | 97,11 | 0,45 | | |
| Oxyde-Ti | TiO₂ | 7,50 | | | | | | | | 99,00 | | |
| Na-hydroxide | NaOH | 35,50 | | | 77,49 | | | | | | | 22,51 |
| « Hermosillo » | | 244,00 | 40,50 | 0,43 | 0,06 | 0,08 | 46,50 | 0,60 | 0,24 | | 11,54 | 0,12 |
| « Carino » | | 192 | 39,14 | 2,44 | 0,04 | 0,05 | 1,50 | 36,57 | 8,23 | | | 12,15 |
| Composition finale (% poids) | | | 39,45 | 15,35 | 3,98 | 0,23 | 17,41 | 10,61 | 10,00 | 1,74 | | |

Comme pour l'exemple 1, le mélange de matières premières est introduit à chaud dans un creuset en platine dans un four flammes (combustion air-gaz ou oxy-gaz) à 1430°C jusqu'à la fusion complète du mélange pour une durée totale de 2h15 incluant 90 min d'affinage. La quantité de CO₂ dégagée est cette fois de 28 grammes, soit une diminution de 90% par rapport à l'exemple 8 de référence.

**Selon une troisième série d'exemples,** on prépare différents mélanges de matière premières pour la fabrication de laine de roche dont la composition finale est conforme à celle décrite dans les demandes EP1667939B1 mentionnées précédemment, et telle que décrite ci-après:

**[Table 17]**

| **Eléments** | **Pourcentage poids%** |
|---|---|
| SiO₂ | 43 |
| CaO | 14,3 |
| MgO | 1,6 |
| Al₂O₃ | 23,2 |
| Fe₂O₃ | 5,6 |
| Na₂O | 6,8 |
| K₂O | 3,9 |
| TiO₂ | 0,8 |

### Exemple 15 (art antérieur)

Selon un exemple de référence on synthétise une composition minérale typique de laine de roche répondant à la composition précédente, selon les techniques actuelles et les matières premières habituellement utilisées.

Le tableau 18 ci-dessous donne les proportions des différentes matières premières et la composition finale du mélange ainsi obtenu :

**[Table 18]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Phonolite | (K,Na)AlSiO₄ | 615,00 | 61,07 | 18,06 | 6,77 | 5,54 | 1,08 | 0,28 | 2,69 | 0,49 | | |
| Nepheline-sye | (K,Na)AlSiO₄ | 55,70 | 56,25 | 24,02 | 8,06 | 8,51 | 1,26 | 0,01 | 0,13 | | | |
| bauxite | Al₂O₃ | 138,40 | 14,20 | 77,51 | 0,26 | 0,23 | 0,61 | 0,43 | 2,53 | 3,42 | | |
| Oxyde-fer | Fe₂O₃ | 36,70 | 1,04 | 0,18 | 0,81 | 0,01 | 0,23 | 0,22 | 97,11 | 0,45 | | |
| Na-carbonate | Na₂CO₃ | 35,30 | | | 58,32 | | 0,10 | | | | 41,49 | |
| Calcaire | CaCO₃ | 210, 70 | 0,54 | 0,08 | 0,19 | 0,01 | 55,33 | 0,27 | 0,05 | | 44,11 | |
| Dolomie | CaMg(CO₃)₂ | 61,00 | 1,88 | 0,48 | 0,28 | 0,09 | 29,52 | 21,40 | 0,28 | 0,02 | 47,80 | |
| Composition finale (% poids) | | | 42,92 | 23,22 | 6,79 | 3,92 | 14,29 | 1,60 | 5,60 | 0,79 | | |

Le mélange de matières premières est introduit à chaud dans un creuset en platine dans un four flammes (combustion air-gaz ou oxy-gaz) à 1475°C jusqu'à la fusion complète du mélange pour une durée totale de 4h30 incluant 180 min d'affinage. La quantité de CO₂ dégagée est de 137 grammes.

### Exemple 16 :

Dans cet exemple le mélange de matières premières est cette fois tel que décrit dans le tableau 19 ci-dessous.

Plus précisément on a utilisé dans cet exemple comme source minérale une roche basaltique issue de la carrière de Mendig en Rhénanie-Palatinat, dont la composition en oxyde est reportée dans le tableau 19 qui suit. Cette matière est directement introduite, sans aucune transformation chimique et après un simple broyage visant à en adapter la granulométrie, en mélange avec les autres constituants dans des proportions ajustées en conséquence pour l'obtention d'un mélange de composition très proche de celle de l'exemple 15 de référence.

**[Table 19]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Phonolite | (K,Na)AlSiO₄ | 426,30 | 61,07 | 18,06 | 6,77 | 5,54 | 1,08 | 0,28 | 2,69 | 0,49 | | |
| Nepheline-sye | (K,Na)AlSiO₄ | 63,50 | 56,25 | 24,02 | 8,06 | 8,51 | 1,26 | 0,01 | 0,13 | | | |
| bauxite | Al₂O₃ | 130,50 | 14,20 | 77,51 | 0,26 | 0,23 | 0,61 | 0,43 | 2,53 | 3,42 | | |
| Oxyde-fer | Fe₂O₃ | 17,20 | 1,04 | 0,18 | 0,81 | 0,01 | 0,23 | 0,22 | 97,11 | 0,45 | | |
| Na-carbonate | Na₂CO₃ | 36,80 | | | 58,32 | | 0,10 | | | | 41,49 | |
| Calcaire | CaCO₃ | 201,70 | 0,54 | 0,08 | 0,19 | 0,01 | 55,33 | 0,27 | 0,05 | | 44,11 | |
| Basalte « Mendig » | 247,00 | 45,89 | 15,65 | 4,79 | 3,90 | 10,13 | 5,51 | 9,84 | 2,37 | | | 0,56 |
| Composition finale (% poids) | | 42,92 | 23,22 | 6,81 | 3,90 | 14,29 | 1,60 | 5,60 | 1,25 | | | |

Le mélange de matières premières est introduit à chaud dans un creuset en platine dans un four flammes (combustion air-gaz ou oxy-gaz) à 1475°C jusqu'à la fusion complète du mélange pour une durée totale de 4h30 incluant 180 min d'affinage. La quantité de CO₂ dégagée est cette fois de 104 grammes, soit une diminution de 24% par rapport à l'exemple 15 de référence.

### Exemple 17 :

Dans cet exemple le mélange de matières premières est cette fois tel que décrit dans le tableau 20 ci-dessous.

Plus précisément on a utilisé dans cet exemple comme source minérale la source « Hudson » décrite précédemment. Cette matière est directement introduite, sans aucune transformation chimique et après un simple broyage visant à en adapter la granulométrie, en mélange avec les autres constituants dans des proportions ajustées en conséquence pour l'obtention d'un mélange de composition très proche de celle de l'exemple 15 de référence.

**[Table 20]**

| | | Bain | SiO₂ | Al₂O₃ | Na₂O | K₂O | CaO | MgO | Fe₂O₃ | TiO₂ | CO₂ |
|---|---|---|---|---|---|---|---|---|---|---|---|
| Nom | formule | grammes | % poids | | | | | | | | |
| Nepheline-sye | (K,Na)AlSiO₄ | 405,00 | 56,25 | 24,02 | 8,06 | 8,51 | 1,26 | 0,01 | 0,13 | | |
| Oxyde-fer | Fe₂O₃ | 53,80 | 1,04 | 0,18 | 0,81 | 0,01 | 0,23 | 0,22 | 97,11 | 0,45 | |
| Na-carbonate | Na₂CO₃ | 56,00 | | | 58,32 | | 0,10 | | | | 41,49 |
| Calcaire | CaCO₃ | 90,00 | 0,54 | 0,08 | 0,19 | 0,01 | 55,33 | 0,27 | 0,05 | | 44,11 |
| « Hudson » | | 420,00 | 47,30 | 32,20 | 1,79 | 0,27 | 16,10 | 0,12 | 0,72 | 0,03 | |
| Dolomie | CaMg(CO₃)₂ | 69,00 | 1,88 | 0,48 | 0,28 | 0,09 | 29,52 | 21,40 | 0,28 | 0,02 | 47,80 |
| Composition finale (% poids) | | | 42,88 | 23,30 | 7,36 | 3,57 | 14,31 | 1,57 | 5,60 | 0,04 | |

Le mélange de matières premières est introduit à chaud dans un creuset en platine dans un four flammes (combustion air-gaz ou oxy-gaz) à 1475°C jusqu'à la fusion complète du mélange pour une durée totale de 4h30 incluant 180 min d'affinage. La quantité de CO₂ dégagée est cette fois de 96 grammes, soit une diminution de 30% par rapport à l'exemple 15 de référence.

### Exemple 18 :

Dans cet exemple le mélange de matières premières est cette fois tel que décrit dans le tableau 21 ci-dessous.

Dans ce mélange initial on a introduit comme réactif les matières minérales naturelles « Hermosillo » et « Hudson» décrites précédemment.

**[Table 21]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Nepheline-sye | (K,Na)AlSiO₄ | 267,00 | 56,25 | 24,02 | 8,06 | 8,51 | 1,26 | 0,01 | 0,13 | | | |
| Oxyde-fer | Fe₂O₃ | 53,80 | 1,04 | 0,18 | 0,81 | 0,01 | 0,23 | 0,22 | 97,11 | 0,45 | | |
| Na-carbonate | Na₂CO₃ | 88,00 | | | 58,32 | | 0,10 | | | | 41,49 | |
| « Hermosillo » | | 76,00 | 40,50 | 0,43 | 0,06 | 0,08 | 46,50 | 0,60 | 0,24 | | 11,54 | 0,12 |
| « Hudson » | | 520,00 | 47,30 | 32,20 | 1,79 | 0,27 | 16,10 | 0,12 | 0,72 | 0,03 | | |
| Dolomie | CaMg(CO₃)₂ | 69,00 | 1,88 | 0,48 | 0,28 | 0,09 | 29,52 | 21,40 | 0,28 | 0,02 | 47,80 | |
| Composition finale (% poids) | | | 42,88 | 23,23 | 8,28 | 2,43 | 14,30 | 1,60 | 5,67 | 0,04 | | |

Le mélange de matières premières est introduit à chaud dans un creuset en platine dans un four flammes (combustion air-gaz ou oxy-gaz) à 1475°C jusqu'à la fusion complète du mélange pour une durée totale de 4h30 incluant 180 min d'affinage. La quantité de CO₂ dégagée est cette fois de 78 grammes, soit une diminution de 43% par rapport à l'exemple 15 de référence.

### Exemple 19 :

Dans cet exemple le mélange de matières premières est cette fois tel que décrit dans le tableau 22 ci-dessous.

Dans ce mélange initial on a introduit comme réactif les matières minérales naturelles « Hermosillo » et « Hudson» décrites précédemment.

**[Table 22]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Nepheline-sye | (K,Na)AlSiO₄ | 267,00 | 56,25 | 24,02 | 8,06 | 8,51 | 1,26 | 0,01 | 0,13 | | | |
| Oxyde-fer | Fe₂O₃ | 53,80 | 1,04 | 0,18 | 0,81 | 0,01 | 0,23 | 0,22 | 97,11 | 0,45 | | |
| Na-hydroxide | NaOH | 66,00 | | | 77,49 | | | | | | | 22,51 |
| Hermosillo | | 76,00 | 40,50 | 0,43 | 0,06 | 0,08 | 46,50 | 0,60 | 0,24 | | 11,54 | 0,12 |
| Hudson | | 520,00 | 47,30 | 32,20 | 1,79 | 0,27 | 16,10 | 0,12 | 0,72 | 0,03 | | |
| Dolomie | CaMg(CO₃)₂ | 69,00 | 1,88 | 0,48 | 0,28 | 0,09 | 29,52 | 21,40 | 0,28 | 0,02 | 47,80 | |
| Composition finale (% poids) | | | 42,88 | 23,23 | 8,26 | 2,43 | 14,29 | 1,60 | 5,67 | 0,04 | | |

Le mélange de matières premières est introduit à chaud dans un creuset en platine dans un four flammes (combustion air-gaz ou oxy-gaz) à 1475°C jusqu'à la fusion complète du mélange pour une durée totale de 4h30 incluant 180 min d'affinage. 42 g de CO₂ sont dégagés lors de la fusion des matières premières soit une diminution de 69% par rapport à l'exemple 15 de référence.

### Exemple 20:

Dans cet exemple le mélange de matières premières est cette fois tel que décrit dans le tableau 23 ci-dessous. Dans ce mélange initial on a introduit comme réactif les matières minérales naturelles « Hermosillo », « Hudson» et «Basalte Mendig» décrites précédemment.

**[Table 23]**

| | | Bain | SiO₂ | Al₂O₃ | Na₂O | K₂O | CaO | MgO | Fe₂O₃ | TiO₂ | CO₂ | H₂O |
|---|---|---|---|---|---|---|---|---|---|---|---|---|
| Nom | formule | grammes | % poids | | | | | | | | | |
| Nepheline-sye | (K,Na)AlSiO₄ | 38,00 | 56,25 | 24,02 | 8,06 | 8,51 | 1,26 | 0,01 | 0,13 | | | |
| Oxyde-fer | Fe₂O₃ | 27,30 | 1,04 | 0,18 | 0,81 | 0,01 | 0,23 | 0,22 | 97,11 | 0,45 | | |
| Na-hydroxide | NaOH | 85,80 | | | 77,49 | | | | | | | 22,51 |
| « Hermosillo » | | 55,00 | 40,50 | 0,43 | 0,06 | 0,08 | 46,50 | 0,60 | 0,24 | | 11,54 | 0,12 |
| « Hudson» | | 565,00 | 47,30 | 32,20 | 1,79 | 0,27 | 16,10 | 0,12 | 0,72 | 0,03 | | |
| Basalte « Mendig » | | 258,00 | 45,89 | 15,65 | 4,79 | 3,90 | 10,13 | 5,51 | 9,84 | 2,37 | | 0,56 |
| Composition finale (% poids) | | | 42,96 | 23,17 | 9,23 | 1,49 | 14,32 | 1,53 | 5,61 | 0,64 | | |

Le mélange de matières premières est introduit à chaud dans un creuset en platine dans un four flammes (combustion air-gaz ou oxy-gaz) à 1475°C jusqu'à la fusion complète du mélange pour une durée totale de 4h30 incluant 180 min d'affinage. La quantité de CO₂ dégagée est cette fois de 6 grammes, soit une diminution de 95% par rapport à l'exemple 15 de référence.

Les avantages et la qualité du verre obtenu à partir des bains fondus de verre selon les exemples 1 (comparatif de référence) à 7 qui précèdent, sont indiqués dans le tableau 24 ci-dessous, dans lequel on a reporté différents critères d'appréciation obtenus selon les mesures suivantes :
1 °) Rendement C'est le rapport entre la quantité de laine produite et la quantité de matières premières enfournée. Plus ce ratio est élevé, plus la quantité de laine pouvant être produite est élevée et plus les émissions de gaz (CO₂, H₂O) sont faibles.
2°) Quantité de sable : c'est la quantité de sable utilisée par rapport à l'exemple 1 de référence (en pourcentage poids économisé). Outre les considérations se santé liées à la consommation excessive de sable (silicose), diminuer la quantité de sable utilisée au profit d'autres matières minérales tels que les silicates naturels permet de diminuer l'énergie pour fondre le bain, la matière première la plus réfractaire du bain étant généralement la silice ou le porteur d'alumine (bauxite) dans les exemples 15 à 20.
3°) Energie consommée : c'est la quantité d'énergie économisée par rapport à l'exemple 1 de référence (en pourcentage). Cette mesure correspond à l'énergie nécessaire à la fusion du mélange de matières premières correspondant à chaque exemple.
4°) Qualité de l'affinage (ou taux bulles) :
On mesure le nombre de bulles par kilogramme de verre fondu à 1500°C pendant 120 minutes. Plus cet indice est élevé plus l'affinage est de bonne qualité.
*** : nombre de bulles exemple/nombre de bulles exemple 1 de référence < 100%
**** : nombre de bulles exemple/nombre de bulles exemple 1 de référence < 50%

5°) Homogénéité en SiO₂ :
L'indice de qualité est proportionnel à l'homogénéité en SiO₂ (telle que mesurée par microsonde/EDS) du verre fondu à 1500°C pendant 120min.
L'homogénéité est mesurée par une série de mesures de la quantité de SiO₂ en différents points des fibres de la laine minérale et un écart type est ensuite déterminé.
** : écart type SiO₂ (mesurée par microsonde/EDS) >0,5%
*** : écart type SiO₂ (mesurée par microsonde/EDS) compris entre 0,1 et 0,5%
**** : écart type SiO₂ (mesurée par microsonde/EDS) <0,1%.

**[Table 24]**

| | Ex. 1 | Ex.2 | Ex.3 | Ex.4 | Ex.5 | Ex.6 | Ex.7 |
|---|---|---|---|---|---|---|---|
| Rendement (%) | 76 | 79 | 79 | 78 | 83 | 85 | 86 |
| Quantité de sable économisée (%) | Ref. | 25 | 34 | 18 | 88 | 97 | 78 |
| Energie économisée (%) | Ref. | 3 | 5 | 4,5 | 10 | 12 | 36 |

La comparaison des résultats ci-dessus montre que les exemples 2 à 7 selon l'invention montrent des indices de qualité globalement supérieurs aux exemples 1 et 6 de référence.

Les exemples 5 et 6 selon l'invention dans lesquels on utilise comme matières premières dudit bain de fusion en combinaison une source de calcium constitué par un silicate de calcium minéral naturel et une source de magnésium constituée par un silicate de magnésium minéral naturel apparait même particulièrement avantageux, selon tous les critères reportées dans le tableau 9 précédant.

Les avantages et la qualité de la laine minérale obtenue à partir des bains fondus selon les exemples 15 (comparatif de référence) à 20 qui précèdent, sont indiqués dans le tableau 25 ci-dessous, dans lequel on a reporté différents critères d'appréciation obtenus selon les mesures suivantes :

**[Table 25]**

| | Ex.15 | Ex.16 | Ex.17 | Ex.18 | Ex.19 | Ex.20 |
|---|---|---|---|---|---|---|
| Rendement (%) | - | 89 | 91 | 93 | 95 | 97 |
| Quantité de sable économisée (%) | Ref. | 30 | 34 | 56 | 100 | 100 |
| Energie économisée (%) | Ref. | 3 | 6 | 10 | 15 | 12 |
| Affinage | Ref. | | *** | *** | **** | *** |
| Homogénéité en SiO₂ | ** | *** | *** | *** | **** | **** |

La comparaison des résultats ci-dessus montre que les exemples 16 à 20 selon l'invention montrent des indices de qualité globalement supérieurs à l'exemple 15 de référence.

## Revendications

1. Procédé de fabrication d'une laine minérale présentant une composition cible, comprenant la fusion d'un mélange de matières premières constituant un bain de fusion, ladite composition cible répondant aux critères suivants, en pourcentages poids :
SiO₂ : entre 30 et 50%,
Na₂O: entre 0 et 20%,
CaO: entre 6 et 35%,
MgO : entre 1 et 15%,
CaO+MgO : entre 11 et 40% en cumulé,
Al₂O₃ : entre 10 et 27%,
K₂O : entre 0 et 15%,
Oxyde de fer : entre 0,5 et 15%,
autre (s) oxyde (s) : entre 0 et 5 % en cumulé, de préférence moins de 3%, le reste étant constitué d'impuretés inévitables,
ledit procédé étant **caractérisé en ce qu'**il comprend les étapes suivantes :
a) on sélectionne les matières premières dudit bain de fusion dont au moins:
- une source de silicium notamment choisie parmi la silice, un basalte, des fibres minérales recyclées ou leurs mélanges,
- optionnellement au moins une source de sodium de préférence choisie parmi l'hydroxyde de sodium NaOH, le carbonate de sodium Na₂CO₃ ou un mélange de d'hydroxyde de sodium NaOH et de carbonate de calcium Na₂CO₃,
- au moins une source de calcium choisie parmi un silicate de calcium minéral naturel comprenant, en pourcentage poids, plus de 30% de SiO₂ et plus de 10% de CaO, CaO et SiO₂ représentant ensemble plus de 70% du poids dudit silicate, et/ou
- au moins une source de magnésium choisi parmi un silicate de magnésium minéral naturel comprenant, en pourcentage poids, plus de 30% de SiO₂ et plus de 10% de MgO, MgO et SiO₂ représentant ensemble plus de 70% du poids dudit silicate,,
lesdites sources de calcium et/ou de magnésium étant des matières minérales naturelles, c'est à dire issues d'un milieu géologique naturel et non transformées,
- optionnellement du calcaire CaCO₃
- optionnellement une source complémentaire d'aluminium telle que la bauxite,
- optionnellement une source complémentaire de magnésium tel qu'un oxyde de magnésium,
- optionnellement une source complémentaire de fer tel qu'un oxyde de fer,
b) on détermine la composition desdites sources de calcium et/ou de magnésium et/ou d'aluminium naturelles,
c) sur la base de la ou lesdites compositions déterminées selon le point b), on détermine les quantités nécessaires en lesdites matières premières pour obtenir un mélange de ladite composition cible,
d) on effectue le mélange desdites matières selon lesdites quantités,
e) on effectue la fusion, le fibrage dudit mélange et son refroidissement dans les conditions permettant l'obtention de ladite laine minérale.

2. Procédé selon la revendication précédente, dans lequel ladite source de calcium est un silicate de calcium minéral naturel comprenant, en pourcentage poids, plus de 30% de SiO₂ et plus de 15% de CaO, CaO et SiO₂ représentant ensemble plus de 70% du poids dudit silicate, de préférence plus de 80% du poids dudit silicate.

3. Procédé selon l'une des revendications précédentes, dans lequel ladite source de magnésium est un silicate de magnésium minéral naturel comprenant, en pourcentage poids, plus de 30% de SiO₂ et plus de 15% de MgO, MgO et SiO₂ représentant ensemble plus de 70% du poids dudit silicate, de préférence plus de 80% du poids dudit silicate.

4. Procédé selon les revendications 2 et 3, dans lequel on utilise une source de calcium qui est un silicate de calcium minéral naturel comprenant, en pourcentage poids, plus de 30% de SiO₂ et plus de 10% de CaO, de préférence plus de 15% de CaO, CaO et SiO₂ représentant ensemble plus de 70% du poids dudit silicate, de préférence plus de 80% du poids dudit silicate et une source de magnésium qui est un silicate de magnésium minéral naturel comprenant, en pourcentage poids, plus de 30% de SiO₂ et plus de 10% de MgO, de préférence plus de 15% de MgO, MgO et SiO₂ représentant ensemble plus de 70% du poids dudit silicate, de préférence plus de 80% du poids dudit silicate.

5. Procédé selon l'une des revendications précédentes, dans lequel ladite source de magnésium est une matière minérale naturelle répondant à la composition suivante, en pourcentages poids :
- SiO₂ : entre 40 et 55%, de préférence entre 45 et 50%,
- Al₂O₃ : entre 0 et 10%, par exemple entre 1 et 10%,
- MgO : entre 20 et 40%, de préférence entre 25 et 35%,
- MgO et SiO₂ représentant en cumulé au moins 70%, voire au moins 75%,
- Fe₂O₃ : entre 0 et 4%, par exemple entre 1 et 3%,
- moins de 5% d'autres oxydes, de préférence moins de 3% d'autres oxydes,
- éventuellement de l'eau.

6. Procédé selon l'une des revendications précédentes dans lequel ladite source de magnésium est une matière minérale naturelle répondant à la composition suivante, en pourcentages poids :
- SiO₂ : entre 55 et 70%, de préférence entre 58 et 65%,
- Al₂O₃ : entre 0 et 10%, par exemple entre 1 et 10%,
- MgO : entre 20 et 40%, de préférence entre 25 et 35%,
- MgO et SiO₂ représentant en cumulé au moins 80%, de préférence au moins 85%, voire au moins 90%,
- Fe₂O₃ : entre 0 et 4%, par exemple entre 0,5 et 2%,
- moins de 5% d'autres oxydes, de préférence moins de 3% d'autres oxydes,
- éventuellement de l'eau, notamment présente dans ladite source sous forme d'hydroxyde(s), de préférence dans une quantité inférieure à 20% et notamment comprise entre 5 et 15%.

7. Procédé selon l'une des revendications 1 ou 2 dans lequel ladite source de magnésium est une matière minérale naturelle répondant à la composition suivante, en pourcentages poids :
- SiO₂ : entre 30 et 50%, de préférence entre 35 et 45%,
- Al₂O₃ : entre 0 et 10%, par exemple entre 1 et 5%,
- MgO : entre 25 et 45%, de préférence entre 30 et 40%,
- MgO et SiO₂ représentant en cumulé au moins 70%, voire au moins 75%,
- Fe₂O₃ : entre 0 et 10%, par exemple entre 5 et 10%,
- moins de 5% d'autres oxydes, de préférence moins de 3% d'autres oxydes
- éventuellement de l'eau, notamment présente dans ladite source sous forme d'hydroxyde(s), de préférence dans une quantité inférieure à 20% et notamment comprise entre 5 et 15%.

8. Procédé selon l'une des revendications précédentes dans lequel ladite source de calcium est une matière minérale naturelle répondant à la composition suivante, en pourcentages poids :
- SiO₂ : entre 30 et 55%, de préférence entre 35 et 50%,
- CaO : entre 35 et 55%, de préférence entre 40 et 50%,
- CaO et SiO₂ représentant en cumulé au moins 80%, voire au moins 85%,
- Fe₂O₃ : entre 0 et 4%, par exemple entre 0,1 et 0,5%,
- Al₂O₃ : entre 0 et 5%, par exemple entre 0,5 et 2%,
- CO₂ : entre 0 et 20%, notamment entre 5 et 15%,
- moins de 5% d'autres oxydes, de préférence moins de 3% d'autres oxydes.

9. Procédé selon l'une des revendications précédentes dans lequel ladite source de calcium est une matière minérale naturelle répondant à la composition suivante, en pourcentages poids :
- SiO₂ : entre 40 et 55%, de préférence entre 40 et 50%,
- CaO : entre 10 et 20%,
- CaO et SiO₂ représentant en cumulé au moins 55%, voire au moins 60%,
- Al₂O₃ : entre 10 et 40%, par exemple entre 25 et 35%,
- Fe₂O₃ : entre 0 et 4%, par exemple entre 0,1 et 1%,
- moins de 5% d'autres oxydes, de préférence moins de 3% d'autres oxydes.

10. Procédé dans lequel on utilise comme matière première au moins une source de magnésium telle que décrite dans l'une des revendications 5 à 7 et au moins une source de calcium telle que décrite selon l'une des revendications 8 ou 9.

11. Procédé dans lequel on utilise comme matière première les deux sources de calcium telle que décrite dans les revendications 8 et 9.

12. Procédé selon l'une des revendications précédentes dans lequel ladite source de calcium est une matière minérale naturelle choisie parmi les roches basaltiques.

13. Procédé selon la revendication 1 dans lequel une source de magnésium et/ou de calcium est une matière minérale naturelle répondant à la composition suivante, en pourcentages poids :
- SiO₂ : entre 40 et 60%, de préférence entre 42 et 55%,
- CaO : entre 5 et 25%, de préférence entre 10 et 20%,
- MgO : entre 3 et 20%, de préférence entre 5 et 15%,
- Al₂O₃ : entre 0 et 20%, par exemple entre 5 et 15%,
- Fe₂O₃ : entre 0 et 20%, par exemple entre 5 et 15%,
- moins de 5% d'autres oxydes, de préférence moins de 3% d'autres oxydes,
- entre 0 et 5% d'eau, notamment présente dans ladite source sous forme d'hydroxyde(s).

14. Procédé dans lequel on utilise comme matière première au moins une source de magnésium telle que décrite dans l'une des revendications 5 à 7 et comme source de magnésium et/ou de calcium une matière minérale naturelle choisie parmi les roches basaltiques telle que décrite dans l'une des revendications 12 ou 13.

15. Procédé dans lequel on utilise comme matière première au moins une source de calcium telle que décrite dans l'une des revendications 8 ou 9, de préférence les deux sources de calcium telle que décrite dans les revendications 8 et 9, et comme source de magnésium et/ou de calcium une matière minérale naturelle choisie parmi les roches basaltiques telle que décrite dans l'une des revendications 12 ou 13.

16. Procédé selon l'une des revendications précédentes, dans lequel on introduit dans le bain de fusion des fibres minérales recyclées.

17. Procédé selon la revendication précédente, dans lequel les fibres minérales recyclées représentent entre 1 et 50% du poids total du bain de fusion, de préférence entre 3 et 40% du poids total du bain de fusion.

18. Procédé selon l'une des revendications précédentes, dans lequel ladite composition cible répond aux critères suivants, en pourcentages poids :
SiO₂ : entre 30 et 50%, de préférence entre 35 et 45%,
Na₂O: entre 0 et 10%, de préférence entre 0,4 et 7%,
CaO: entre 10 et 35%, de préférence entre 12 et 25%,
MgO : entre 1 et 15%, de préférence entre 5 et 13%,
CaO+MgO : entre 11 et 40% en cumulé,
Al₂O₃ : entre 10 et 27%,
K₂O : entre 0 et 2%, de préférence entre 0 et 1%,
Oxyde de fer : entre 0,5 et 15%, de préférence entre 3 et 12%,
autre (s) oxyde (s) : entre 0 et 5 % en cumulé, de préférence moins de 3%, le reste étant constitué d'impuretés inévitables.

19. Procédé selon la revendication précédente, dans lequel ladite composition cible répond aux critères suivants, en pourcentages poids :
SiO₂ : entre 30 et 50%
Al₂O₃ ; entre 10 et 20%
CaO+MgO : entre 20 et 40 % en cumulé
Na₂O+K₂O : entre 1 et 10 %

20. Procédé selon l'une des revendications 1 à 18, dans lequel ladite composition cible répond aux critères suivants, en pourcentages poids :
- SiO₂ entre 39 et 50%
- Al₂O₃ entre 16 et 27%, de préférence entre 20 et 25%
- CaO entre 6 et 20%
- MgO entre 1 et 5%
- Na₂O entre 0 et 20%, de préférence entre 3 et 10%
- K₂O entre 0 et 15%, de préférence entre 2 et 10%
- P2O5 entre 0 et 3%
- Fe₂O₃ entre 1,5 et 15%
- B2O3 entre 0 et 2%
- TiO₂ entre 0 et 2%.

21. Procédé selon la revendication précédente, dans lequel ladite composition cible répond aux critères suivants, en pourcentages poids :
- moins de 9%, en cumulé de Na₂O et de K₂O (Na2O+K2O < 9%) et/ou
- moins de 20% en cumulé de MgO et de CaO (MgO+CaO < 20%)

22. Mélange de matières premières tel que décrit dans l'une des revendications précédentes, comprenant :
- une source de silicium notamment choisie parmi la silice, un basalte, des fibres minérales recyclées ou leurs mélanges,
- optionnellement au moins une source de sodium de préférence choisie parmi l'hydroxyde de sodium NaOH, le carbonate de sodium Na2CO3 ou un mélange de d'hydroxyde de sodium NaOH et de carbonate de calcium Na2CO3,
- au moins une source de calcium choisie parmi un silicate de calcium minéral naturel comprenant, en pourcentage poids, plus de 30% de SiO₂ et plus de 10% de CaO, CaO et SiO₂ représentant ensemble plus de 70% du poids dudit silicate, et/ou
- au moins une source de magnésium choisi parmi un silicate de magnésium minéral naturel comprenant, en pourcentage poids, plus de 30% de SiO₂ et plus de 10% de MgO, MgO et SiO₂ représentant ensemble plus de 70% du poids dudit silicate,
lesdites sources de calcium et/ou de magnésium étant des matières minérales naturelles, c'est à dire issues d'un milieu géologique naturel et non transformées,
- optionnellement du calcaire CaCO₃
- optionnellement une source complémentaire d'aluminium telle que la bauxite,
- optionnellement une source complémentaire de magnésium tel qu'un oxyde de magnésium,
- optionnellement une source complémentaire de fer tel qu'un oxyde de fer.

## Patentansprüche

1. Verfahren zum Herstellen einer Mineralwolle, die eine Zielzusammensetzung aufweist, umfassend das Schmelzen einer Mischung aus Rohstoffen, die ein Schmelzbad bilden, wobei die Zielzusammensetzung den folgenden Kriterien in Gewichtsprozent entspricht:
SiO₂: zwischen 30 und 50 %,
Na₂O: zwischen 0 und 20 %,
CaO: zwischen 6 und 35 %,
MgO: zwischen 1 und 15 %,
CaO+MgO: zwischen 11 und 40 % kumulativ,
Al₂O₃: zwischen 10 und 27 %,
K₂O: zwischen 0 und 15 %,
Eisenoxid: zwischen 0,5 und 15 %,
sonstige(s) Oxid(e): zwischen 0 und 5 % kumulativ, vorzugsweise weniger als 3 %, wobei der Rest aus unvermeidbaren Verunreinigungen gebildet ist,
wobei das Verfahren **dadurch gekennzeichnet ist, dass** es die folgenden Schritte umfasst:
a) Auswählen der Rohstoffe des Schmelzbads, mindestens von:
- einer Siliziumquelle, die insbesondere aus Kieselsäure, Basalt, rückgewonnenen Mineralfasern oder deren Mischungen ausgewählt ist,
- optional mindestens einer Natriumquelle, die vorzugsweise aus Natriumhydroxid NaOH, Natriumcarbonat Na₂CO₃ oder einer Mischung aus Natriumhydroxid NaOH und Calciumcarbonat Na₂CO₃ ausgewählt ist,
- mindestens einer Calciumquelle, die aus einem natürlichen mineralischen Calciumsilicat ausgewählt ist, umfassend in Gewichtsprozent mehr als 30 % SiO₂ und mehr als 10 % CaO, wobei CaO und SiO₂ zusammen mehr als 70 % des Gewichts des Silicats ausmachen, und/oder
- mindestens einer Magnesiumquelle, die aus einem natürlichen mineralischen Magnesiumsilicat ausgewählt ist, umfassend in Gewichtsprozent mehr als 30 % SiO₂ und mehr als 10 % MgO, wobei MgO und SiO₂ zusammen mehr als 70 % des Gewichts des Silicats ausmachen,
wobei die Calcium- und/oder die Magnesiumquelle natürliche mineralische Stoffe sind, das heißt, aus einer natürlichen geologischen Umgebung stammen und nicht umgewandelt wurden,
- optional Kalkstein CaCO₃
- optional einer ergänzenden Quelle von Aluminium, wie Bauxit,
- optional einer ergänzenden Quelle von Magnesium, wie Magnesiumoxid,
- optional einer ergänzenden Quelle von Eisen, wie Eisenoxid,
b) Bestimmen der Zusammensetzung der natürlichen Calcium- und/oder der natürlichen Magnesium- und/oder der natürlichen Aluminiumquelle,
c) Bestimmen, auf der Grundlage der gemäß Punkt b) bestimmten Zusammensetzung oder der Zusammensetzungen, die zum Gewinnen einer Mischung der Zielzusammensetzung erforderlichen Mengen der Rohstoffe,
d) Durchführen des Mischens der Stoffe in den Mengen,
e) Durchführen des Schmelzens, des Zerfaserns und des Abkühlens der Mischung unter den Bedingungen, die die Gewinnung der Mineralwolle ermöglichen.

2. Verfahren nach dem vorstehenden Anspruch, wobei die Calciumquelle ein natürliches mineralisches Calciumsilicat ist, umfassend in Gewichtsprozent mehr als 30 % SiO₂ und mehr als 15 % CaO, wobei CaO und SiO₂ zusammen mehr als 70 % des Gewichts des Silicats, vorzugsweise mehr als 80 % des Silicats, ausmachen.

3. Verfahren nach einem der vorstehenden Ansprüche, wobei die Magnesiumquelle ein natürliches mineralisches Magnesiumsilicat ist, umfassend in Gewichtsprozent mehr als 30 % SiO₂ und mehr als 15 % MgO, wobei MgO und SiO₂ zusammen mehr als 70 % des Gewichts des Silicats, vorzugsweise mehr als 80 % des Gewichts des Silicats, ausmachen.

4. Verfahren nach den Ansprüchen 2 und 3, wobei eine Calciumquelle, die ein natürliches mineralisches Calciumsilicat ist, umfassend in Gewichtsprozent mehr als 30 % SiO₂ und mehr als 10 % CaO, vorzugsweise mehr als 15 % CaO, wobei CaO und SiO₂ zusammen mehr als 70 % des Gewichts des Silicats, vorzugsweise mehr als 80 % des Gewichts des Silicats, ausmachen, und eine Magnesiumquelle verwendet werden, die ein natürliches mineralisches Magnesiumsilicat ist, umfassend in Gewichtsprozent mehr als 30 % SiO₂ und mehr als 10 % MgO, vorzugsweise mehr als 15 % MgO, wobei MgO und SiO₂ zusammen mehr als 70 % des Gewichts des Silicats, vorzugsweise mehr als 80 % des Gewichts des Silicats, ausmachen.

5. Verfahren nach einem der vorstehenden Ansprüche, wobei die Magnesiumquelle ein natürlicher mineralischer Stoff ist, der der folgenden Zusammensetzung in Gewichtsprozent entspricht:
- SiO₂: zwischen 40 und 55 %, vorzugsweise zwischen 45 und 50 %,
- Al₂O₃: zwischen 0 und 10 %, beispielsweise zwischen 1 und 10 %,
- MgO: zwischen 20 und 40 %, vorzugsweise zwischen 25 und 35 %,
- wobei MgO und SiO₂ kumuliert mindestens 70 %, sogar mindestens 75 %, ausmachen,
- Fe₂O₃: zwischen 0 und 4 %, beispielsweise zwischen 1 und 3 %,
- weniger als 5 % anderer Oxide, vorzugsweise weniger als 3 % anderer Oxide,
- gegebenenfalls Wasser.

6. Verfahren nach einem der vorstehenden Ansprüche, wobei die Magnesiumquelle ein natürlicher mineralischer Stoff ist, der der folgenden Zusammensetzung in Gewichtsprozent entspricht:
- SiO₂: zwischen 55 und 70 %, vorzugsweise zwischen 58 und 65 %,
- Al₂O₃: zwischen 0 und 10 %, beispielsweise zwischen 1 und 10 %,
- MgO: zwischen 20 und 40 %, vorzugsweise zwischen 25 und 35 %,
- wobei MgO und SiO₂ kumuliert mindestens 80 %, vorzugsweise mindestens 85 %, sogar mindestens 90 %, ausmachen,
- Fe₂O₃: zwischen 0 und 4 %, beispielsweise zwischen 0,5 und 2 %,
- weniger als 5 % anderer Oxide, vorzugsweise weniger als 3 % anderer Oxide,
- optional Wasser, das in der Quelle insbesondere in Form von Hydroxid(en), vorzugsweise in einer Menge von weniger als 20 % und insbesondere zwischen 5 und 15 %, vorhanden ist.

7. Verfahren nach einem der Ansprüche 1 oder 2, wobei die Magnesiumquelle ein natürlicher mineralischer Stoff ist, der der folgenden Zusammensetzung in Gewichtsprozent entspricht:
- SiO₂: zwischen 30 und 50 %, vorzugsweise zwischen 35 und 45 %,
- Al₂O₃: zwischen 0 und 10 %, beispielsweise zwischen 1 und 5 %,
- MgO: zwischen 25 und 45 %, vorzugsweise zwischen 30 und 40 %,
- wobei MgO und SiO₂ kumuliert mindestens 70 %, sogar mindestens 75 %, ausmachen,
- Fe₂O₃: zwischen 0 und 10 %, beispielsweise zwischen 5 und 10 %,
- weniger als 5 % anderer Oxide, vorzugsweise weniger als 3 % anderer Oxide,
- optional Wasser, das in der Quelle insbesondere in Form von Hydroxid(en), vorzugsweise in einer Menge von weniger als 20 % und insbesondere zwischen 5 und 15 %, vorhanden ist.

8. Verfahren nach einem der vorstehenden Ansprüche, wobei die Calciumquelle ein natürlicher mineralischer Stoff ist, der der folgenden Zusammensetzung in Gewichtsprozent entspricht:
- SiO₂: zwischen 30 und 55 %, vorzugsweise zwischen 35 und 50 %,
- CaO: zwischen 35 und 55 %, vorzugsweise zwischen 40 und 50 %,
- wobei CaO und SiO₂ kumuliert mindestens 80 %, sogar mindestens 85 %, ausmachen,
- Fe₂O₃: zwischen 0 und 4 %, beispielsweise zwischen 0,1 und 0,5 %,
- Al₂O₃: zwischen 0 und 5 %, beispielsweise zwischen 0,5 und 2 %,
- CO₂: zwischen 0 und 20 %, insbesondere zwischen 5 und 15 %,
- weniger als 5 % anderer Oxide, vorzugsweise weniger als 3 % anderer Oxide.

9. Verfahren nach einem der vorstehenden Ansprüche, wobei die Calciumquelle ein natürlicher mineralischer Stoff ist, der der folgenden Zusammensetzung in Gewichtsprozent entspricht:
- SiO₂: zwischen 40 und 55 %, vorzugsweise zwischen 40 und 50 %,
- CaO: zwischen 10 und 20 %,
- wobei CaO und SiO₂ kumuliert mindestens 55 %, sogar mindestens 60 %, ausmachen,
- Al₂O₃: zwischen 10 und 40 %, beispielsweise zwischen 25 und 35 %,
- Fe₂O₃: zwischen 0 und 4 %, beispielsweise zwischen 0,1 und 1 %,
- weniger als 5 % anderer Oxide, vorzugsweise weniger als 3 % anderer Oxide.

10. Verfahren, wobei als Rohstoff mindestens eine Magnesiumquelle wie nach einem der Ansprüche 5 bis 7 beschrieben und mindestens eine Calciumquelle wie nach einem der Ansprüche 8 oder 9 beschrieben verwendet werden.

11. Verfahren, wobei als Rohstoff die zwei Calciumquellen wie nach den Ansprüchen 8 und 9 beschrieben verwendet werden.

12. Verfahren nach einem der vorstehenden Ansprüche, wobei die Calciumquelle ein aus Basaltgestein ausgewählter natürlicher mineralischer Stoff ist.

13. Verfahren nach Anspruch 1, wobei eine Magnesium- und/oder eine Calciumquelle ein natürlicher mineralischer Stoff ist, der der folgenden Zusammensetzung in Gewichtsprozent entspricht:
- SiO₂: zwischen 40 und 60 %, vorzugsweise zwischen 42 und 55 %,
- CaO: zwischen 5 und 25 %, vorzugsweise zwischen 10 und 20 %,
- MgO: zwischen 3 und 20 %, vorzugsweise zwischen 5 und 15 %,
- Al₂O₃: zwischen 0 und 20 %, beispielsweise zwischen 5 und 15 %,
- Fe₂O₃: zwischen 0 und 20 %, beispielsweise zwischen 5 und 15 %,
- weniger als 5 % anderer Oxide, vorzugsweise weniger als 3 % anderer Oxide,
- zwischen 0 und 5 % Wasser, das in der Quelle insbesondere in Form von Hydroxid(en) vorhanden ist.

14. Verfahren, wobei als Rohstoff mindestens eine Magnesiumquelle wie in einem der Ansprüche 5 bis 7 beschrieben und als Magnesium- und/oder Calciumquelle ein natürlicher mineralischer Stoff, der aus Basaltgestein ausgewählt ist, wie in einem der Ansprüche 12 oder 13 beschrieben verwendet werden.

15. Verfahren, wobei als Rohstoff mindestens eine Calciumquelle wie in einem der Ansprüche 8 oder 9 beschrieben, vorzugsweise zwei Calciumquellen, wie in den Ansprüchen 8 und 9 beschrieben, und als Magnesium- und/oder Calciumquelle ein natürlicher mineralischer Stoff, der aus Basaltgestein ausgewählt ist, wie in einem der Ansprüche 12 oder 13 beschrieben, verwendet werden.

16. Verfahren nach einem der vorstehenden Ansprüche, wobei rückgewonnene Mineralfasern in das Schmelzbad eingebracht werden.

17. Verfahren nach dem vorstehenden Anspruch, wobei die rückgewonnenen Mineralfasern zwischen 1 und 50 % des Gesamtgewichts des Schmelzbads, vorzugsweise zwischen 3 und 40 % des Gesamtgewichts des Schmelzbads, ausmachen.

18. Verfahren nach einem der vorstehenden Ansprüche, wobei die Zielzusammensetzung den folgenden Kriterien in Gewichtsprozent entspricht:
SiO₂: zwischen 30 und 50 %, vorzugsweise zwischen 35 und 45 %,
Na₂O: zwischen 0 und 10 %, vorzugsweise zwischen 0,4 und 7 %,
CaO: zwischen 10 und 35 %, vorzugsweise zwischen 12 und 25 %,
MgO: zwischen 1 und 15 %, vorzugsweise zwischen 5 und 13 %,
CaO+MgO: zwischen 11 und 40 % kumulativ,
Al₂O₃: zwischen 10 und 27 %,
K₂O: zwischen 0 und 2 %, vorzugsweise zwischen 0 und 1 %,
Eisenoxid: zwischen 0,5 und 15 %, vorzugsweise zwischen 3 und 12 %,
andere(s) Oxid(e): zwischen 0 und 5 % kumulativ, vorzugsweise weniger als 3 %,
wobei der Rest unvermeidbare Verunreinigungen sind.

19. Verfahren nach dem vorstehenden Anspruch, wobei die Zielzusammensetzung den folgenden Kriterien in Gewichtsprozent entspricht:
SiO2: zwischen 30 und 50 %
Al2O3; zwischen 10 und 20 %
CaO+MgO: zwischen 20 und 40 % kumulativ
Na2O+K2O: zwischen 1 und 10 %

20. Verfahren nach einem der Ansprüche 1 bis 18, wobei die Zielzusammensetzung den folgenden Kriterien in Gewichtsprozent entspricht:
- SiO2 zwischen 39 und 50 %
- Al2O3 zwischen 16 und 27 %, vorzugsweise zwischen 20 und 25 %
- CaO zwischen 6 und 20 %
- MgO zwischen 1 und 5 %
- Na2O zwischen 0 und 20 %, vorzugsweise zwischen 3 und 10 %
- K2O zwischen 0 und 15 %, vorzugsweise zwischen 2 und 10 %
- P2O5 zwischen 0 und 3 %
- Fe2O3 zwischen 1,5 und 15 %
- B2O3 zwischen 0 und 2 %
- TiO2 zwischen 0 und 2 %.

21. Verfahren nach dem vorstehenden Anspruch, wobei die Zielzusammensetzung den folgenden Kriterien in Gewichtsprozent entspricht:
- weniger als 9 %, kumulativ von Na₂O und K₂O (Na₂O+K₂O < 9 %)
und/oder
- weniger als 20 %, kumulativ von MgO und CaO (MgO+CaO < 20 %)

22. Mischung aus Rohstoffen wie in einem der vorstehenden Ansprüche beschrieben, umfassend:
- eine Siliziumquelle, die insbesondere aus Kieselsäure, Basalt, rückgewonnenen Mineralfasern oder deren Mischungen ausgewählt ist,
- optional mindestens eine Natriumquelle, die vorzugsweise aus Natriumhydroxid NaOH, Natriumcarbonat Na2CO3 oder einer Mischung aus Natriumhydroxid NaOH und Calciumcarbonat Na2CO3 ausgewählt ist,
- mindestens eine Calciumquelle, die aus einem natürlichen mineralischen Calciumsilicat ausgewählt ist, umfassend in Gewichtsprozent mehr als 30 % SiO₂ und mehr als 10 % CaO, wobei CaO und SiO₂ zusammen mehr als 70 % des Gewichts des Silicats ausmachen, und/oder
- mindestens eine Magnesiumquelle, die aus einem natürlichen mineralischen Magnesiumsilicat ausgewählt ist, umfassend in Gewichtsprozent mehr als 30 % SiO₂ und mehr als 10 % MgO, wobei MgO und SiO₂ zusammen mehr als 70 % des Gewichts des Silicats ausmachen,
wobei die Calcium- und/oder die Magnesiumquelle natürliche mineralische Stoffe sind, das heißt, aus einer natürlichen geologischen Umgebung stammen und nicht umgewandelt wurden,
- optional Kalkstein CaCO₃
- optional eine ergänzende Quelle von Aluminium, wie Bauxit,
- optional eine ergänzende Quelle von Magnesium, wie Magnesiumoxid,
- optional eine ergänzende Quelle von Eisen, wie Eisenoxid.

## Claims

1. A method for manufacturing a mineral wool having a target composition, comprising the melting of a mixture of raw materials constituting a molten bath, said target composition meeting the following criteria, in weight percentages:
SiO₂: between 30 and 50%,
Na₂O: between 0 and 20%,
CaO: between 6 and 35%,
MgO: between 1 and 15%,
CaO+MgO: between 11 and 40% in total,
Al₂O₃: between 10 and 27%,
K₂O: between 0 and 15%,
Iron oxide: between 0.5 and 15%,
other oxide(s): between 0 and 5% in total, preferably less than 3%,
the remainder consisting of unavoidable impurities,
said method being **characterized in that** it comprises the following steps:
a) selecting the raw materials of said molten bath from, at least:
- a silicon source, in particular chosen from silica, a basalt, recycled mineral fibers or mixtures thereof,
- optionally at least one sodium source preferably selected from sodium hydroxide NaOH, sodium carbonate Na₂CO₃ or a mixture of sodium hydroxide NaOH and calcium carbonate Na₂CO₃,
- at least one calcium source selected from a natural mineral calcium silicate comprising, in percentage by weight, more than 30% SiO₂ and more than 10% CaO, CaO and SiO₂ together representing more than 70% of the weight of said silicate, and/or
- at least one magnesium source selected from a natural mineral magnesium silicate comprising, in percentage by weight, more than 30% SiO₂ and more than 10% MgO, MgO and SiO₂ together representing more than 70% of the weight of said silicate,
said calcium and/or magnesium sources being natural mineral materials, that is to say unprocessed mineral materials originating from a natural geological environment,
- optionally, limestone CaCO₃
- optionally a complementary source of aluminum such as bauxite,
- optionally a complementary source of magnesium such as a magnesium oxide,
- optionally a complementary source of iron such as an iron oxide,
b) the composition of said sources of calcium and/or magnesium and/or natural aluminum is determined,
c) on the basis of said composition(s) determined according to point b), determining the necessary quantities of said raw materials to obtain a mixture of said target composition,
d) mixing said materials according to said quantities,
e) melting and fiberizing said mixture and cooling same under the conditions that make it possible to obtain said mineral wool.

2. The method according to the preceding claim, wherein said calcium source is a natural mineral calcium silicate comprising, in percentage by weight, more than 30% SiO₂ and more than 15% CaO, CaO and SiO₂ together representing more than 70% of the weight of said silicate, preferably more than 80% of the weight of said silicate.

3. The method according to one of the preceding claims, wherein said magnesium source is a natural mineral magnesium silicate comprising, in percentage by weight, more than 30% SiO₂ and more than 15% MgO, MgO and SiO₂ together representing more than 70% of the weight of said silicate, preferably more than 80% of the weight of said silicate.

4. The method according to claims 2 and 3, wherein a calcium source is used which is a natural mineral calcium silicate comprising, in percentage by weight, more than 30% SiO₂ and more than 10% CaO, preferably more than 15% CaO, CaO and SiO₂ together representing more than 70% of the weight of said silicate, preferably more than 80% of the weight of said silicate and a magnesium source which is a natural mineral magnesium silicate comprising, in percentage by weight, more than 30% SiO₂ and more than 10% MgO, preferably more than 15% MgO, MgO and SiO₂ together representing more than 70% of the weight of said silicate, preferably more than 80% of the weight of said silicate.

5. The method according to one of the preceding claims, wherein said magnesium source is a natural mineral material corresponding to the following composition, in percentages by weight:
- SiO₂: between 40 and 55%, preferably between 45 and 50%,
- Al₂O₃: between 0 and 10%, for example between 1 and 10%,
- MgO: between 20 and 40%, preferably between 25 and 35%,
- MgO and SiO₂ cumulatively representing at least 70%, or even at least 75%,
- Fe₂O₃: between 0 and 4%, for example between 1 and 3%,
- less than 5% of other oxides, preferably less than 3% of other oxides,
- optionally water.

6. The method according to one of the preceding claims, wherein said magnesium source is a natural mineral material corresponding to the following composition, in percentages by weight:
- SiO₂: between 55 and 70%, preferably between 58 and 65%,
- Al₂O₃: between 0 and 10%, for example between 1 and 10%,
- MgO: between 20 and 40%, preferably between 25 and 35%
- MgO and SiO₂ cumulatively representing at least 80%, preferably at least 85%, or even at least 90%,
- Fe₂O₃: between 0 and 4%, for example between 0.5 and 2%,
- less than 5% of other oxides, preferably less than 3% of other oxides,
- optionally water, in particular present in said source in the form of hydroxide(s), preferably in an amount of less than 20% and in particular between 5 and 15%.

7. The method according to one of claims 1 or 2, wherein said magnesium source is a natural mineral material corresponding to the following composition, in percentages by weight:
- SiO₂: between 30 and 50%, preferably between 35 and 45%,
- Al₂O₃: between 0 and 10%, for example between 1 and 5%,
- MgO: between 25 and 45%, preferably between 30 and 40%,
- MgO and SiO₂ cumulatively representing at least 70%, or even at least 75%,
- Fe₂O₃: between 0 and 10%, for example between 5 and 10%,
- less than 5% of other oxides, preferably less than 3% of other oxides
- optionally water, in particular present in said source in the form of hydroxide(s), preferably in an amount of less than 20% and in particular between 5 and 15%.

8. The method according to one of the preceding claims, wherein said calcium source is a natural mineral material corresponding to the following composition, in percentages by weight:
- SiO₂: between 30 and 55%, preferably between 35 and 50%,
- CaO: between 35 and 55%, preferably between 40 and 50%,
- CaO and SiO₂ cumulatively representing at least 80%, or even at least 85%,
- Fe₂O₃: between 0 and 4%, for example between 0.1 and 0.5%,
- Al₂O₃: between 0 and 5%, for example between 0.5 and 2%,
- CO₂: between 0 and 20%, in particular between 5 and 15%,
- less than 5% of other oxides, preferably less than 3% of other oxides.

9. The method according to one of the preceding claims, wherein said calcium source is a natural mineral material corresponding to the following composition, in percentages by weight:
- SiO₂: between 40 and 55%, preferably between 40 and 50%,
- CaO: between 10 and 20%,
- CaO and SiO₂ cumulatively representing at least 55%, or even at least 60%,
- Al₂O₃: between 10 and 40%, for example between 25 and 35%,
- Fe₂O₃: between 0 and 4%, for example between 0.1 and 1%,
- less than 5% of other oxides, preferably less than 3% of other oxides.

10. A method wherein at least one magnesium source as described in one of claims 5 to 7 and at least one calcium source as described in one of claims 8 or 9 are used as raw materials.

11. A method wherein the two calcium sources as described in claims 8 and 9 are used as raw materials.

12. The method according to one of the preceding claims, wherein said source of calcium is a natural mineral material chosen from basaltic rocks.

13. The method according to the claim 1, wherein a magnesium and/or calcium source is a natural mineral material corresponding to the following composition, in percentages by weight:
- SiO₂: between 40 and 60%, preferably between 42 and 55%,
- CaO: between 5 and 25%, preferably between 10 and 20%,
- MgO: between 3 and 20%, preferably between 5 and 15%,
- Al₂O₃: between 0 and 20%, for example between 5 and 15%,
- Fe₂O₃: between 0 and 20%, for example between 5 and 15%,
- less than 5% of other oxides, preferably less than 3% of other oxides,
- between 0 and 5% water, in particular present in said source in the form of hydroxide(s).

14. A method wherein at least one magnesium source as described in one of claims 5 to 7 is used as the raw material, and a natural mineral material chosen from basaltic rocks as described in one of claims 12 or 13 is used as a magnesium and/or calcium source.

15. A method wherein at least one calcium source as described in one of claims 8 or 9 is used as raw material, preferably the two calcium sources as described in claims 8 and 9, and a natural mineral material chosen from basaltic rocks as described in one of claims 12 or 13 is used as a magnesium and/or calcium source.

16. The method according to one of the preceding claims, wherein recycled mineral fibers are introduced into the molten bath.

17. The method according to the preceding claim, wherein the recycled mineral fibers represent between 1 and 50% of the total weight of the molten bath, preferably between 3 and 40% of the total weight of the molten bath.

18. The method according to one of the preceding claims, wherein said target composition satisfies the following criteria, in percentages by weight:
SiO₂: between 30 and 50%, preferably between 35 and 45%,
Na₂O: between 0 and 10%, preferably between 0.4 and 7%,
CaO: between 10 and 35%, preferably between 12 and 25%,
MgO: between 1 and 15%, preferably between 5 and 13%,
CaO+MgO: between 11 and 40% in total,
Al₂O₃: between 10 and 27%,
K₂O: between 0 and 2%, preferably between 0 and 1%,
Iron oxide: between 0.5 and 15%, preferably between 3 and 12% other oxide(s): between 0 and 5% in total, preferably less than 3%, the remainder consisting of unavoidable impurities.

19. The method according to the preceding claim, wherein said target composition satisfies the following criteria, in percentages by weight:
SiO2: between 30 and 50%
Al2O3: between 10 and 20%
CaO+MgO: between 20 and 40% in total
Na₂O+K₂O: between 1 to 10%

20. The method according to one of the claims 1 to 18, wherein said target composition satisfies the following criteria, in percentages by weight:
| | |
|---|---|
| - SiO2 | between 39 and 50% |
| - Al2O3 | between 16 and 27%, preferably between 20 and 25% |
| - CaO | between 6 and 20% |
| - MgO | between 1 and 5% |
| - Na2O | between 0 and 20%, preferably between 3 and 10% |
| - K2O | between 0 and 15%, preferably between 2 and 10% |
| - P2O5 | between 0 and 3% |
| - Fe2O3 | between 1.5 and 15% |
| - B2O3 | between 0 and 2% |
| - TiO2 | between 0 and 2%. |

21. The method according to the preceding claim, wherein said target composition satisfies the following criteria, in percentages by weight:
- less than 9% in total of Na₂O and K₂O (Na₂O+K₂O < 9%) and/or
- less than 20% in total of MgO and CaO (MgO+CaO < 20%)

22. A mixture of raw materials as described in one of the preceding claims, comprising:
- a silicon source, in particular chosen from silica, a basalt, recycled mineral fibers or mixtures thereof,
- optionally at least one sodium source preferably selected from sodium hydroxide NaOH, sodium carbonate Na2CO3 or a mixture of sodium hydroxide NaOH and calcium carbonate Na2CO3,
- at least one calcium source selected from a natural mineral calcium silicate comprising, in percentage by weight, more than 30% SiO₂ and more than 10% CaO, CaO and SiO₂ together representing more than 70% of the weight of said silicate, and/or
- at least one magnesium source selected from a natural mineral magnesium silicate comprising, in percentage by weight, more than 30% SiO₂ and more than 10% MgO, MgO and SiO₂ together representing more than 70% of the weight of said silicate,
said calcium and/or magnesium sources being natural mineral materials, that is to say unprocessed mineral materials originating from a natural geological environment,
- optionally, limestone CaCO₃
- optionally a complementary source of aluminum such as bauxite,
- optionally a complementary source of magnesium such as a magnesium oxide,
- optionally a complementary source of iron such as an iron oxide.
